(19) Europäisches Patentamt
European Patent Office
Office européen des brevets

(11) **EP 4 156 555 A1**

(12) **EUROPEAN PATENT APPLICATION**

(43) Date of publication:
**29.03.2023 Bulletin 2023/13**

(51) International Patent Classification (IPC):
***H04B 10/2575*** *(2013.01)*

(21) Application number: **22194876.3**

(52) Cooperative Patent Classification (CPC):
**H04B 10/2575**

(22) Date of filing: **09.09.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.09.2021 US 202163247184 P**
**22.08.2022 US 202217892849**

(71) Applicant: **Apple Inc.**
**Cupertino CA 95014 (US)**

(72) Inventors:
• **GUNZELMANN, Bertram R.**
**Koenigsbrunn (DE)**
• **MUHAREMOVIC, Nedim**
**Nuremberg (DE)**
• **BOOS, Zdravko**
**Munchen (DE)**

(74) Representative: **Froud, Christopher Andrew**
**Withers & Rogers LLP**
**2 London Bridge**
**London SE1 9RA (GB)**

(54) **ELECTRONIC DEVICES WITH SHARED PHASE SHIFTING FOR HIGH FREQUENCY COMMUNICATION**

(57)    An electronic device may include light sources that generate first and second optical signals. An array may include antennas arranged in rows and columns. First paths may be coupled to each row of the array and second paths may be coupled to each column of the array. First phase shifters may be disposed on the first paths and second phase shifters may be disposed on the second paths. The first phase shifters may apply respective phase shifts to the first optical signal to produce shifted signals for each row. The second phase shifters may apply respective phase shifts to the second optical signal to produce shifted signals for each column. Each antenna may convey wireless signals based on the shifted signals provided to its row and column. Sharing phase shifters in this way may allow the array to perform beam steering while minimizing the number of phase shifters.

*FIG. 7*

# EP 4 156 555 A1

## Description

This application claims priority to U.S. patent application No. 17/892,849, filed August 22, 2022, and U.S. provisional patent application No. 63/247,184, filed September 22, 2021, which are hereby incorporated by reference herein in their entireties.

## Field

This disclosure relates generally to electronic devices and, more particularly, to electronic devices with wireless circuitry.

## Background

Electronic devices are often provided with wireless capabilities. An electronic device with wireless capabilities has wireless circuitry that includes one or more antennas. The wireless circuitry is used to perform communications using radio-frequency signals conveyed by the antennas.

As software applications on electronic devices become more data-intensive over time, demand has grown for electronic devices that support wireless communications at higher data rates. However, the maximum data rate supported by electronic devices is limited by the frequency of the radio-frequency signals. In addition, it can be difficult to provide wireless circuitry that supports these frequencies without consuming an excessive amount of area and resources on the device.

## Summary

An electronic device may include wireless circuitry with light sources that generate at least a first optical local oscillator (LO) signal and a second optical LO signal. The wireless circuitry may include a phased antenna array. The phased antenna array may include antennas arranged in rows and columns or in other patterns. The antennas may include photodiodes, antenna radiating elements coupled to the photodiodes, and optical couplers coupled to the photodiodes. One of the optical LO signals may be modulated with wireless data during signal transmission if desired.

First optical paths may be coupled to each row of the array. Second optical paths may be coupled to each column of the array. First optical phase shifters may be disposed on the first optical paths. Second optical phase shifters may be disposed on the second optical paths. The first optical phase shifters may apply respective phase shifts to the first optical LO signal to produce phase-shifted signals provided to each row of the array. The second optical phase shifters may apply respective phase shifts to the second optical LO signal to produce phase-shifted signals provided to each column of the array. Each photodiode may convey wireless signals at a frequency greater than 100 GHz using its corresponding antenna radiating element based on the phase-shifted signals provided to its row and column. The phase shifts provided across the rows and the phase shifts provided across the columns may control the array to convey the wireless signals within a signal beam oriented in a selected beam pointing direction. By sharing optical phase shifters across rows and columns of the array, the array may perform three-dimensional signal beam steering while minimizing the number of optical phase shifters required by the wireless circuitry.

An aspect of the disclosure provides an electronic device. The electronic device may include a first light source configured to generate a first optical local oscillator (LO) signal. The electronic device may include a second light source configured to generate a second optical LO signal. The electronic device may include an array of antennas arranged in rows and columns, each antenna in the array including a respective photodiode coupled to a respective antenna radiating element. The electronic device may include first optical paths coupled to the rows of the array. The electronic device may include second optical paths coupled to the columns of the array. The electronic device may include first optical phase shifters disposed on the first optical paths and configured to output phase-shifted versions of the first optical LO signal on the first optical paths. The electronic device may include second optical phase shifters disposed on the second optical paths and configured to output phase-shifted versions of the second optical LO signal on the second optical paths, the photodiodes in the array being configured to convey wireless signals using the antenna radiating elements based on the phase-shifted versions of the first optical LO signals and the phase-shifted versions of the second optical LO signals.

An aspect of the disclosure provides a method of wireless communication via an electronic device having an array of antennas arranged in rows and columns, the antennas having photodiodes and antenna radiating elements coupled to the photodiodes. The method can include receiving, at the photodiodes in the antennas of each row in the array, a respective phase-shifted version of a first optical local oscillator (LO) signal. The method can include receiving, at the photodiodes in the antennas of each column of the array, a respective phase-shifted version of a second optical LO signal. The method can include transmitting, via the antenna radiating elements, wireless signals based on the phase-shifted versions of the first optical LO signal and the phase-shifted versions of the second optical LO signal.

An aspect of the disclosure provides an electronic device. The electronic device can include a first antenna having a first photodiode, a first antenna radiating element coupled to the first photodiode, and a first optical coupler coupled to the first photodiode. The electronic device can include a second antenna having a second photodiode, a second antenna radiating element coupled to the second photodiode, and a second optical coupler coupled to the second photodiode. The electronic device can include a first optical path coupled to the first optical coupler and the second optical coupler. The electronic device can include a first optical phase shifter configured to generate a first phase-shifted signal on the first optical path by applying a first optical phase shift to a first optical local oscillator (LO) signal, the first photodiode being configured to transmit first wireless signals using the first antenna radiating element based at least on the first phase-shifted signal, and the second photodiode being configured to transmit second wireless signals using the second antenna radiating element based at least on the first phase-shifted signal.

## Brief Description of the Drawings

FIG. 1 is a block diagram of an illustrative electronic device having wireless circuitry with at least one antenna that conveys wireless signals at frequencies greater than about 100 GHz in accordance with some embodiments.

FIG. 2 is a top view of an illustrative antenna that transmits wireless signals at frequencies greater than about 100 GHz based on optical local oscillator (LO) signals in accordance with some embodiments.

FIG. 3 is a top view showing how an illustrative antenna of the type shown in FIG. 2 may convert received wireless signals at frequencies greater than about 100 GHz into intermediate frequency signals based on optical LO signals in accordance with some embodiments.

FIG. 4 is a top view showing how multiple antennas of the type shown in FIGS. 2 and 3 may be stacked to cover multiple polarizations in accordance with some embodiments.

FIG. 5 is a top view showing how stacked antennas of the type shown in FIG. 4 may be integrated into a phased antenna array for conveying wireless signals at frequencies greater than about 100 GHz within a corresponding signal beam.

FIG. 6 is a circuit diagram of illustrative wireless circuitry having an antenna that transmits wireless signals at frequencies greater than about 100 GHz and that receives wireless signals at frequencies greater than about 100 GHz for conversion to intermediate frequencies and then to the optical domain in accordance with some embodiments.

FIG. 7 is a circuit diagram of an illustrative phased antenna array that conveys wireless signals at frequencies greater than about 100 GHz within a corresponding signal beam in accordance with some embodiments.

FIG. 8 is a diagram of an illustrative phased antenna array that conveys wireless signals at frequencies greater than about 100 GHz and that is fed using optical phase shifters that are shared among the rows and columns of the array in accordance with some embodiments.

FIG. 9 is a diagram showing how illustrative antennas for conveying wireless signals of different polarizations at frequencies greater than about 100 GHz may be fed using respective optical paths in accordance with some embodiments.

FIG. 10 is a side view showing how an illustrative THz lens may overlap a phased antenna array for focusing electromagnetic energy in accordance with some embodiments.

FIG. 11 is a flow chart of illustrative operations involved in using a phased antenna array having shared phase shifters to convey wireless signals at frequencies greater than about 100 GHz in accordance with some embodiments.

## Detailed Description

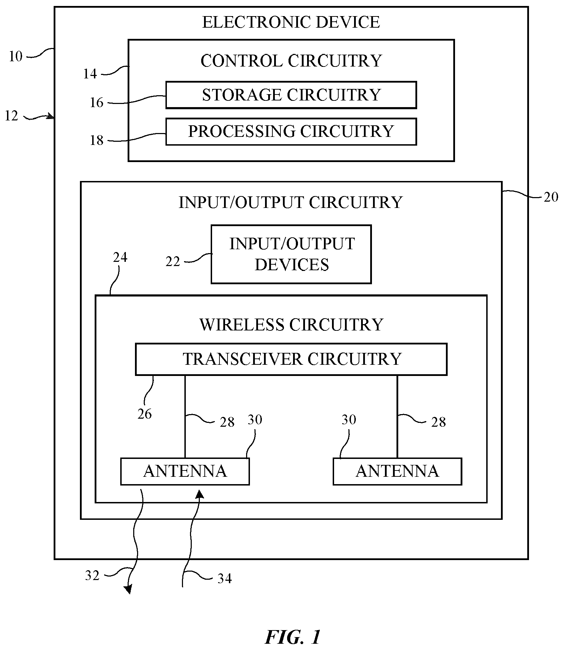

Electronic device 10 of FIG. 1 (sometimes referred to herein as electro-optical device 10) may be a computing device such as a laptop computer, a desktop computer, a computer monitor containing an embedded computer, a tablet computer, a cellular telephone, a media player, or other handheld or portable electronic device, a smaller device such as a wristwatch device, a pendant device, a headphone or earpiece device, a device embedded in eyeglasses, goggles, or other equipment worn on a user's head, or other wearable or miniature device, a television, a computer display that does not contain an embedded computer, a gaming device, a navigation device, an embedded system such as a system in which electronic equipment with a display is mounted in a kiosk or automobile, a wireless internet-connected voice-controlled speaker, a home entertainment device, a remote control device, a gaming controller, a peripheral user input device, a wireless base station or access point, equipment that implements the functionality of two or more of these devices, or other electronic equipment.

As shown in the functional block diagram of FIG. 1, device 10 may include components located on or within an electronic device housing such as housing 12. Housing 12, which may sometimes be referred to as a case, may be formed of plastic, glass, ceramics, fiber composites, metal (e.g., stainless steel, aluminum, metal alloys, etc.), other suitable materials, or a combination of these materials. In some situations, parts or all of housing 12 may be formed from dielectric or other low-conductivity material (e.g., glass, ceramic, plastic, sapphire, etc.). In other situations, housing 12 or at least some of the structures that make up housing 12 may be formed from metal elements.

Device 10 may include control circuitry 14. Control circuitry 14 may include storage such as storage circuitry 16. Storage circuitry 16 may include hard disk drive storage, nonvolatile memory (e.g., flash memory or other electrically-programmable-read-only memory configured to form a solid-state drive), volatile memory (e.g., static or dynamic random-access-memory), etc. Storage circuitry 16 may include storage that is integrated within device 10 and/or removable storage media.

Control circuitry 14 may include processing circuitry such as processing circuitry 18. Processing circuitry 18 may be used to control the operation of device 10. Processing circuitry 18 may include on one or more processors, microprocessors, microcontrollers, digital signal processors, host processors, baseband processor integrated circuits, application specific integrated circuits, central processing units (CPUs), graphics processing units (GPUs), etc. Control circuitry 14 may be configured to perform operations in device 10 using hardware (e.g., dedicated hardware or circuitry), firmware, and/or software. Software code for performing operations in device 10 may be stored on storage circuitry 16 (e.g., storage circuitry 16 may include non-transitory (tangible) computer readable storage media that stores the software code). The software code may sometimes be referred to as program instructions, software, data, instructions, or code. Software code stored on storage circuitry 16 may be executed by processing circuitry 18.

Control circuitry 14 may be used to run software on device 10 such as satellite navigation applications, internet browsing applications, voice-over-internet-protocol (VOIP) telephone call applications, email applications, media playback applications, operating system functions, etc. To support interactions with external equipment, control circuitry 14 may be used in implementing communications protocols. Communications protocols that may be implemented using control circuitry 14 include internet protocols, wireless local area network (WLAN) protocols (e.g., IEEE 802.11 protocols - sometimes referred to as Wi-Fi®), protocols for other short-range wireless communications links such as the Bluetooth® protocol or other wireless personal area network (WPAN) protocols, IEEE 802.11ad protocols (e.g., ultra-wideband protocols), cellular telephone protocols (e.g., 3G protocols, 4G (LTE) protocols, 3GPP Fifth Generation (5G) New Radio (NR) protocols, Sixth Generation (6G) protocols, sub-THz protocols, THz protocols, etc.), antenna diversity protocols, satellite navigation system protocols (e.g., global positioning system (GPS) protocols, global navigation satellite system (GLONASS) protocols, etc.), antenna-based spatial ranging protocols, optical communications protocols, or any other desired communications protocols. Each communications protocol may be associated with a corresponding radio access technology (RAT) that specifies the physical connection methodology used in implementing the protocol.

Device 10 may include input-output circuitry 20. Input-output circuitry 20 may include input-output devices 22. Input-output devices 22 may be used to allow data to be supplied to device 10 and to allow data to be provided from device 10 to external devices. Input-output devices 22 may include user interface devices, data port devices, and other input-output components. For example, input-output devices 22 may include touch sensors, displays (e.g., touch-sensitive and/or force-sensitive displays), light-emitting components such as displays without touch sensor capabilities, buttons (mechanical, capacitive, optical, etc.), scrolling wheels, touch pads, key pads, keyboards, microphones, cameras, buttons, speakers, status indicators, audio jacks and other audio port components, digital data port devices, motion sensors (accelerometers, gyroscopes, and/or compasses that detect motion), capacitance sensors, proximity sensors, magnetic sensors, force sensors (e.g., force sensors coupled to a display to detect pressure applied to the display), temperature sensors, etc. In some configurations, keyboards, headphones, displays, pointing devices such as trackpads, mice, and joysticks, and other input-output devices may be coupled to device 10 using wired or wireless connections (e.g., some of input-output devices 22 may be peripherals that are coupled to a main processing unit or other portion of device 10 via a wired or wireless link).

Input-output circuitry 20 may include wireless circuitry 24 to support wireless communications. Wireless circuitry 24 (sometimes referred to herein as wireless communications circuitry 24) may include one or more antennas 30. Wireless circuitry 24 may also include transceiver circuitry 26. Transceiver circuitry 26 may include transmitter circuitry, receiver circuitry, modulator circuitry, demodulator circuitry (e.g., one or more modems), radio-frequency circuitry, one or more radios, intermediate frequency circuitry, optical transmitter circuitry, optical receiver circuitry, optical light sources, other optical components, baseband circuitry (e.g., one or more baseband processors), amplifier circuitry, clocking circuitry such as one or more local oscillators and/or phase-locked loops, memory, one or more registers, filter circuitry, switching circuitry, analog-to-digital converter (ADC) circuitry, digital-to-analog converter (DAC) circuitry, radio-frequency transmission lines, optical fibers, and/or any other circuitry for transmitting and/or receiving wireless signals using antennas 30. The components of transceiver circuitry 26 may be implemented on one integrated circuit, chip, system-on-chip (SOC), die, printed circuit board, substrate, or package, or the components of transceiver circuitry 26 may be distributed across two or more integrated circuits, chips, SOCs, printed circuit boards, substrates, and/or packages.

The example of FIG. 1 is merely illustrative. While control circuitry 14 is shown separately from wireless circuitry 24 in the example of FIG. 1 for the sake of clarity, wireless circuitry 24 may include processing circuitry (e.g., one or more processors) that forms a part of processing circuitry 18 and/or storage circuitry that forms a part of storage circuitry 16 of control circuitry 14 (e.g., portions of control circuitry 14 may be implemented on wireless circuitry 24). As an example, control circuitry 14 may include baseband circuitry (e.g., one or more baseband processors), digital control circuitry, analog control circuitry, and/or other control circuitry that forms part of wireless circuitry 24. The baseband circuitry may, for example, access a communication protocol stack on control circuitry 14 (e.g., storage circuitry 20) to: perform user plane functions at a PHY layer, MAC layer, RLC layer, PDCP layer, SDAP layer, and/or PDU layer, and/or to perform control plane functions at the PHY layer, MAC layer, RLC layer, PDCP layer, RRC, layer, and/or non-access stratum layer.

Transceiver circuitry 26 may be coupled to each antenna 30 in wireless circuitry 24 over a respective signal path 28. Each signal path 28 may include one or more radio-frequency transmission lines, waveguides, optical fibers, and/or any other desired lines/paths for conveying wireless signals between transceiver circuitry 26 and antenna 30. Antennas 30 may be formed using any desired antenna structures for conveying wireless signals. For example, antennas 30 may include antennas with resonating elements that are formed from dipole antenna structures, planar dipole antenna structures (e.g., bowtie antenna structures), slot antenna structures, loop antenna structures, patch antenna structures, inverted-F antenna structures, planar inverted-F antenna structures, helical antenna structures, monopole antennas, dipoles, hybrids of these designs, etc. Filter circuitry, switching circuitry, impedance matching circuitry, and/or other antenna tuning components may be adjusted to adjust the frequency response and wireless performance of antennas 30 over time.

If desired, two or more of antennas 30 may be integrated into a phased antenna array (sometimes referred to herein as a phased array antenna) in which each of the antennas conveys wireless signals with a respective phase and magnitude that is adjusted over time so the wireless signals constructively and destructively interfere to produce (form) a signal beam in a given pointing direction. The term "convey wireless signals" as used herein means the transmission and/or reception of the wireless signals (e.g., for performing unidirectional and/or bidirectional wireless communications with external wireless communications equipment). Antennas 30 may transmit the wireless signals by radiating the signals into free space (or to free space through intervening device structures such as a dielectric cover layer). Antennas 30 may additionally or alternatively receive the wireless signals from free space (e.g., through intervening devices structures such as a dielectric cover layer). The transmission and reception of wireless signals by antennas 30 each involve the excitation or resonance of antenna currents on an antenna resonating (radiating) element in the antenna by the wireless signals within the frequency band(s) of operation of the antenna.

Transceiver circuitry 26 may use antenna(s) 30 to transmit and/or receive wireless signals that convey wireless communications data between device 10 and external wireless communications equipment (e.g., one or more other devices such as device 10, a wireless access point or base station, etc.). The wireless communications data may be conveyed bidirectionally or unidirectionally. The wireless communications data may, for example, include data that has been encoded into corresponding data packets such as wireless data associated with a telephone call, streaming media content, internet browsing, wireless data associated with software applications running on device 10, email messages, etc.

Additionally or alternatively, wireless circuitry 24 may use antenna(s) 30 to perform wireless sensing operations. The sensing operations may allow device 10 to detect (e.g., sense or identify) the presence, location, orientation, and/or velocity (motion) of objects external to device 10. Control circuitry 14 may use the detected presence, location, orientation, and/or velocity of the external objects to perform any desired device operations. As examples, control circuitry 14 may use the detected presence, location, orientation, and/or velocity of the external objects to identify a corresponding user input for one or more software applications running on device 10 such as a gesture input performed by the user's hand(s) or other body parts or performed by an external stylus, gaming controller, head-mounted device, or other peripheral devices or accessories, to determine when one or more antennas 30 needs to be disabled or provided with a reduced maximum transmit power level (e.g., for satisfying regulatory limits on radio-frequency exposure), to determine how to steer (form) a radio-frequency signal beam produced by antennas 30 for wireless circuitry 24 (e.g., in scenarios where antennas 30 include a phased array of antennas 30), to map or model the environment around device 10 (e.g., to produce a software model of the room where device 10 is located for use by an augmented reality application, gaming application, map application, home design application, engineering application, etc.), to detect the presence of obstacles in the vicinity of (e.g., around) device 10 or in the direction of motion of the user of device 10, etc.

Wireless circuitry 24 may transmit and/or receive wireless signals within corresponding frequency bands of the electromagnetic spectrum (sometimes referred to herein as communications bands or simply as "bands"). The frequency bands handled by communications circuitry 26 may include wireless local area network (WLAN) frequency bands (e.g., Wi-Fi® (IEEE 802.11) or other WLAN communications bands) such as a 2.4 GHz WLAN band (e.g., from 2400 to 2480 MHz), a 5 GHz WLAN band (e.g., from 5180 to 5825 MHz), a Wi-Fi® 6E band (e.g., from 5925-7125 MHz), and/or other Wi-Fi® bands (e.g., from 1875-5160 MHz), wireless personal area network (WPAN) frequency bands such as the 2.4 GHz Bluetooth® band or other WPAN communications bands, cellular telephone frequency bands (e.g., bands from about 600 MHz to about 5 GHz, 3G bands, 4G LTE bands, 5G New Radio Frequency Range 1 (FR1) bands below 10 GHz, 5G New Radio Frequency Range 2 (FR2) bands between 20 and 60 GHz, etc.), other centimeter or millimeter wave frequency bands between 10-100 GHz, near-field communications frequency bands (e.g., at 13.56 MHz), satellite navigation frequency bands (e.g., a GPS band from 1565 to 1610 MHz, a Global Navigation Satellite System (GLONASS) band, a BeiDou Navigation Satellite System (BDS) band, etc.), ultra-wideband (UWB) frequency bands that operate under the IEEE 802.15.4 protocol and/or other ultra-wideband communications protocols, communications bands under the family of 3GPP wireless communications standards, communications bands under the IEEE 802.XX family of standards, and/or any other desired frequency bands of interest.

Over time, software applications on electronic devices such as device 10 have become more and more data intensive. Wireless circuitry on the electronic devices therefore needs to support data transfer at higher and higher data rates. In general, the data rates supported by the wireless circuitry are proportional to the frequency of the wireless signals conveyed by the wireless circuitry (e.g., higher frequencies can support higher data rates than lower frequencies). Wireless circuitry 24 may convey centimeter and millimeter wave signals to support relatively high data rates (e.g., because centimeter and millimeter wave signals are at relatively high frequencies between around 10 GHz and 100 GHz). However, the data rates supported by centimeter and millimeter wave signals may still be insufficient to meet all the data transfer needs of device 10. To support even higher data rates such as data rates up to 5-10 Gbps or higher, wireless circuitry 24 may convey wireless signals at frequencies greater than 100 GHz.

As shown in FIG. 1, wireless circuitry 24 may transmit wireless signals 32 and may receive wireless signals 34 at frequencies greater than around 100 GHz. Wireless signals 32 and 34 may sometimes be referred to herein as tremendously high frequency (THF) signals 32 and 34, sub-THz signals 32 and 34, THz signals 32 and 34, or sub-millimeter wave signals 32 and 34. THF signals 32 and 34 may be at sub-THz or THz frequencies such as frequencies between 100 GHz and 1 THz, between 100 GHz and 10 THz, between 100 GHz and 2 THz, between 200 GHz and 1 THz, between 300 GHz and 1 THz, between 300 GHz and 2 THz, between 300 GHz and 10 THz, between 100 GHz and 800 GHz, between 200 GHz and 1.5 THz, etc. (e.g., within a sub-THz, THz, THF, or sub-millimeter frequency band such as a 6G frequency band). The high data rates supported by these frequencies may be leveraged by device 10 to perform cellular telephone voice and/or data communications (e.g., while supporting spatial multiplexing to provide further data bandwidth), to perform spatial ranging operations such as radar operations to detect the presence, location, and/or velocity of objects external to device 10, to perform automotive sensing (e.g., with enhanced security), to perform health/body monitoring on a user of device 10 or another person, to perform gas or chemical detection, to form a high data rate wireless connection between device 10 and another device or peripheral device (e.g., to form a high data rate connection between a display driver on device 10 and a display that displays ultra-high resolution video), to form a remote radio head (e.g., a flexible high data rate connection), to form a THF chip-to-chip connection within device 10 that supports high data rates (e.g., where one antenna 30 on a first chip in device 10 transmits THF signals 32 to another antenna 30 on a second chip in device 10), and/or to perform any other desired high data rate operations.

Space is at a premium within electronic devices such as device 10. In some scenarios, different antennas 30 are used to transmit THF signals 32 than are used to receive THF signals 34. However, handling transmission of THF signals 32 and reception of THF signals 34 using different antennas 30 can consume an excessive amount of space and other resources within device 10 because two antennas 30 and signal paths 28 would be required to handle both transmission and reception. To minimize space and resource consumption within device 10, the same antenna 30 and signal path 28 may be used to both transmit THF signals 32 and to receive THF signals 34. If desired, multiple antennas 30 in wireless circuitry 24 may transmit THF signals 32 and may receive THF signals 34. The antennas may be integrated into a phased antenna array that transmits THF signals 32 and that receives THF signals 34 within a corresponding signal beam oriented in a selected beam pointing direction.

It can be challenging to incorporate components into wireless circuitry 24 that support wireless communications at these high frequencies. If desired, transceiver circuitry 26 and signal paths 28 may include optical components that convey optical signals to support the transmission of THF signals 32 and the reception of THF signals 34 in a space and resource-efficient manner. The optical signals may be used in transmitting THF signals 32 at THF frequencies and in receiving THF signals 34 at THF frequencies.

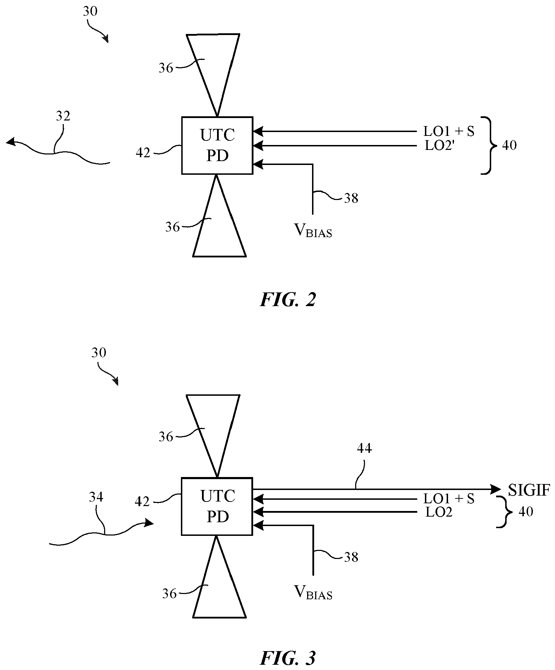

FIG. 2 is a diagram of an illustrative antenna 30 that may be used to both transmit THF signals 32 and to receive THF signals 34 using optical signals. Antenna 30 may include one or more antenna radiating (resonating) elements such as radiating (resonating) element arms 36. In the example of FIG. 2, antenna 30 is a planar dipole antenna (sometimes referred to as a "bowtie" antenna) having two opposing radiating element arms 36 (e.g., bowtie arms or dipole arms). This is merely illustrative and, in general, antenna 30 may be any type of antenna having any desired antenna radiating element architecture.

As shown in FIG. 2, antenna 30 includes a photodiode (PD) 42 coupled between radiating element arms 36. Electronic devices that include antennas 30 with photodiodes 42 such as device 10 may sometimes also be referred to as electro-optical devices (e.g., electro-optical device 10). Photodiode 42 may be a programmable photodiode. An example in which photodiode 42 is a programmable uni-travelling-carrier photodiode (UTC PD) is described herein as an example. Photodiode 42 may therefore sometimes be referred to herein as UTC PD 42 or programmable UTC PD 42. This is merely illustrative and, in general, photodiode 42 may include any desired type of adjustable/programmable photodiode or component that converts electromagnetic energy at optical frequencies to current at THF frequencies on radiating element arms 36 and/or vice versa. Each radiating element arm 36 may, for example, have a first edge at UTC PD 42 and a second edge opposite the first edge that is wider than the first edge (e.g., in implementations where antenna 30 is a bowtie antenna). Other radiating elements may be used if desired.

UTC PD 42 may have a bias terminal 38 that receives one or more control signals $V_{BIAS}$. Control signals $V_{BIAS}$ may include bias voltages provided at one or more voltage levels and/or other control signals for controlling the operation of UTC PD 42 such as impedance adjustment control signals for adjusting the output impedance of UTC PD 42. Control circuitry 14 (FIG. 1) may provide (e.g., apply, supply, assert, etc.) control signals $V_{BIAS}$ at different settings (e.g., values, magnitudes, etc.) to dynamically control (e.g., program or adjust) the operation of UTC PD 42 over time. For example, control signals $V_{BIAS}$ may be used to control whether antenna 30 transmits THF signals 32 or receives THF signals 34. When control signals $V_{BIAS}$ include a bias voltage asserted at a first level or magnitude, antenna 30 may be configured to transmit THF signals 32. When control signals $V_{BIAS}$ include a bias voltage asserted at a second level or magnitude, antenna 30 may be configured to receive THF signals 34. In the example of FIG. 2, control signals $V_{BIAS}$ include the bias voltage asserted at the first level to configure antenna 30 to transmit THF signals 32. If desired, control signals $V_{BIAS}$ may also be adjusted to control the waveform of the THF signals (e.g., as a squaring function that preserves the modulation of incident optical signals, a linear function, etc.), to perform gain control on the signals conveyed by antenna 30, and/or to adjust the output impedance of UTC PD 42.

As shown in FIG. 2, UTC PD 42 may be optically coupled to optical path 40. Optical path 40 may include one or more optical fibers or waveguides. UTC PD 42 may receive optical signals from transceiver circuitry 26 (FIG. 1) over optical path 40. The optical signals may include a first optical local oscillator (LO) signal LO1 and a second optical local oscillator signal LO2. Optical local oscillator signals LO1 and LO2 may be generated by light sources in transceiver circuitry 26 (FIG. 1). Optical local oscillator signals LO1 and LO2 may be at optical wavelengths (e.g., between 400 nm and 700 nm), ultra-violet wavelengths (e.g., near-ultra-violet or extreme ultraviolet wavelengths), and/or infrared wavelengths (e.g., near-infrared wavelengths, mid-infrared wavelengths, or far-infrared wavelengths). Optical local oscillator signal LO2 may be offset in wavelength from optical local oscillator signal LO1 by a wavelength offset X. Wavelength offset X may be equal to the wavelength of the THF signals conveyed by antenna 30 (e.g., between 100 GHz and 1 THz (1000 GHz), between 100 GHz and 2 THz, between 300 GHz and 800 GHz, between 300 GHz and 1 THz, between 300 and 400 GHz, etc.).

During signal transmission, wireless data (e.g., wireless data packets, symbols, frames, etc.) may be modulated onto optical local oscillator signal LO2 to produce modulated optical local oscillator signal LO2'. If desired, optical local oscillator signal LO1 may be provided with an optical phase shift S. Optical path 40 may illuminate UTC PD 42 with optical local oscillator signal LO1 (plus the optical phase shift S when applied) and modulated optical local oscillator signal LO2'. If desired, lenses or other optical components may be interposed between optical path 40 and UTC PD 42 to help focus the optical local oscillator signals onto UTC PD 42.

UTC PD 42 may convert optical local oscillator signal LO1 and modulated local oscillator signal LO2' (e.g., beats between the two optical local oscillator signals) into antenna currents that run along the perimeter of radiating element arms 36. The frequency of the antenna currents is equal to the frequency difference between local oscillator signal LO 1 and modulated local oscillator signal LO2'. The antenna currents may radiate (transmit) THF signals 32 into free space. Control signal $V_{BIAS}$ may control UTC PD 42 to convert the optical local oscillator signals into antenna currents on radiating element arms 36 while preserving the modulation and thus the wireless data on modulated local oscillator signal LO2' (e.g., by applying a squaring function to the signals). THF signals 32 will thereby carry the modulated wireless data for reception and demodulation by external wireless communications equipment.

FIG. 3 is a diagram showing how antenna 30 may receive THF signals 34 (e.g., after changing the setting of control signals $V_{BIAS}$ into a reception state from the transmission state of FIG. 2). As shown in FIG. 3, THF signals 34 may be incident upon antenna radiating element arms 36. The incident THF signals 34 may produce antenna currents that flow around the perimeter of radiating element arms 36. UTC PD 42 may use optical local oscillator signal LO1 (plus the optical phase shift S when applied), optical local oscillator signal LO2 (e.g., without modulation), and control signals $V_{BIAS}$ (e.g., a bias voltage asserted at the second level) to convert the received THF signals 34 into intermediate frequency signals SIGIF that are output onto intermediate frequency signal path 44.

The frequency of intermediate frequency signals SIGIF may be equal to the frequency of THF signals 34 minus the difference between the frequency of optical local oscillator signal LO1 and the frequency of optical local oscillator signal LO2. As an example, intermediate frequency signals SIGIF may be at lower frequencies than THF signals 32 and 34 such as centimeter or millimeter wave frequencies between 10 GHz and 100 GHz, between 30 GHz and 80 GHz, around 60 GHz, etc. If desired, transceiver circuitry 26 (FIG. 1) may change the frequency of optical local oscillator signal LO1 and/or optical local oscillator signal LO2 when switching from transmission to reception or vice versa. UTC PD 42 may preserve the data modulation of THF signals 34 in intermediate signals SIGIF. A receiver in transceiver circuitry 26 (FIG. 1) may demodulate intermediate frequency signals SIGIF (e.g., after further downconversion) to recover the wireless data from THF signals 34. In another example, wireless circuitry 24 may convert intermediate frequency signals SIGIF to the optical domain before recovering the wireless data. In yet another example, intermediate frequency signal path 44 may be omitted and UTC PD 42 may convert THF signals 34 into the optical domain for subsequent demodulation and data recovery (e.g., in a sideband of the optical signal).

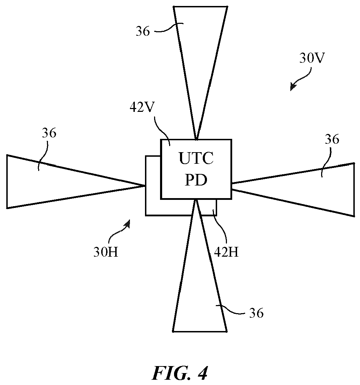

The antenna 30 of FIGS. 2 and 3 may support transmission of THF signals 32 and reception of THF signals 34 with a given polarization (e.g., a linear polarization such as a vertical polarization). If desired, wireless circuitry 24 (FIG. 1) may include multiple antennas 30 for covering different polarizations. FIG. 4 is a diagram showing one example of how wireless circuitry 24 may include multiple antennas 30 for covering different polarizations.

As shown in FIG. 4, the wireless circuitry may include a first antenna 30 such as antenna 30V for covering a first polarization (e.g., a first linear polarization such as a vertical polarization) and may include a second antenna 30 such as antenna 30H for covering a second polarization different from or orthogonal to the first polarization (e.g., a second linear polarization such as a horizontal polarization). Antenna 30V may have a UTC PD 42 such as UTC PD 42V coupled between a corresponding pair of radiating element arms 36. Antenna 30H may have a UTC PD 42 such as UTC PD 42H coupled between a corresponding pair of radiating element arms 36 oriented non-parallel (e.g., orthogonal) to the radiating element arms 36 in antenna 30V. This may allow antennas 30V and 30H to transmit THF signals 32 with respective (orthogonal) polarizations and may allow antennas 30V and 30H to receive THF signals 32 with respective (orthogonal) polarizations.

To minimize space within device 10, antenna 30V may be vertically stacked over or under antenna 30H (e.g., where UTC PD 42V partially or completely overlaps UTC PD 42H). In this example, antennas 30V and 30H may both be formed on the same substrate such as a rigid or flexible printed circuit board. The substrate may include multiple stacked dielectric layers (e.g., layers of ceramic, epoxy, flexible printed circuit board material, rigid printed circuit board material, etc.). The radiating element arms 36 in antenna 30V may be formed on a separate layer of the substrate than the radiating element arms 36 in antenna 30H or the radiating element arms 36 in antenna 30V may be formed on the same layer of the substrate as the radiating element arms 36 in antenna 30H. UTC PD 42V may be formed on the same layer of the substrate as UTC PD 42H or UTC PD 42V may be formed on a separate layer of the substrate than UTC PD 42H. UTC PD 42V may be formed on the same layer of the substrate as the radiating element arms 36 in antenna 30V or may be formed on a separate layer of the substrate as the radiating element arms 36 in antenna 30V. UTC PD 42H may be formed on the same layer of the substrate as the radiating element arms 36 in antenna 30H or may be formed on a separate layer of the substrate as the radiating element arms 36 in antenna 30H.

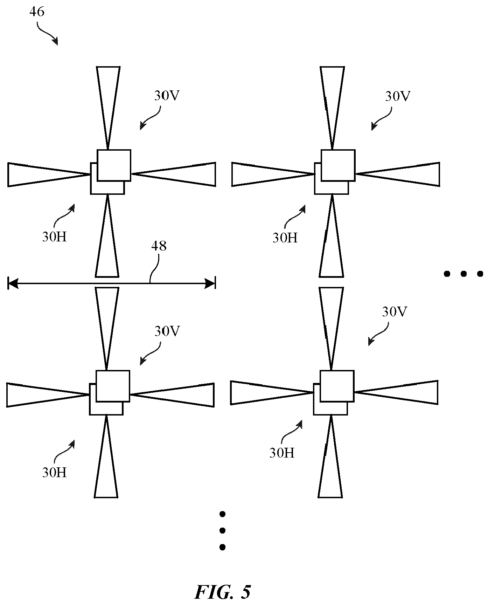

If desired, antennas 30 or antennas 30H and 30V of FIG. 4 may be integrated within a phased antenna array. FIG. 5 is a diagram showing one example of how antennas 30H and 30V may be integrated within a phased antenna array. As shown in FIG. 5, device 10 may include a phased antenna array 46 of stacked antennas 30H and 30V arranged in a rectangular grid of rows and columns. Each of the antennas in phased antenna array 46 may be formed on the same substrate. This is merely illustrative. In general, phased antenna array 46 (sometimes referred to as a phased array antenna) may include any desired number of antennas 30V and 30H (or non-stacked antennas 30) arranged in any desired pattern. Each of the antennas in phased antenna array 46 may be provided with a respective optical phase shift S (FIGS. 2 and 3) that configures the antennas to collectively transmit THF signals 32 and/or receive THF signals 34 that sum to form a signal beam of THF signals in a desired beam pointing direction. The beam pointing direction may be selected to point the signal beam towards external communications equipment, towards a desired external object, away from an external object, etc.

Phased antenna array 46 may occupy relatively little space within device 10. For example, each antenna 30V/30H may have a length 48 (e.g., as measured from the end of one radiating element arm to the opposing end of the opposite radiating element arm). Length 48 may be approximately equal to one-half the wavelength of THF signals 32 and 34. For example, length 48 may be as small as 0.5 mm or less. Each UTC-PD 42 in phased antenna array 46 may occupy a lateral area of 100 square microns or less. This may allow phased antenna array 46 to occupy very little area within device 10, thereby allowing the phased antenna array to be integrated within different portions of device 10 while still allowing other space for device components. The examples of FIGS. 2-5 are merely illustrative and, in general, each antenna may have any desired antenna radiating element architecture.

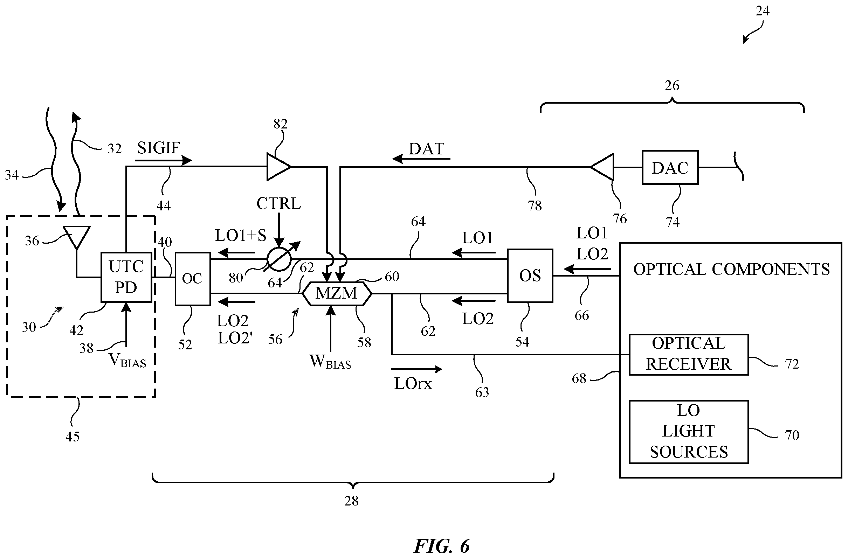

FIG. 6 is a circuit diagram showing how a given antenna 30 and signal path 28 (FIG. 1) may be used to both transmit THF signals 32 and receive THF signals 34 based on optical local oscillator signals. In the example of FIG. 6, UTC PD 42 converts received THF signals 34 into intermediate frequency signals SIGIF that are then converted to the optical domain for recovering the wireless data from the received THF signals.

As shown in FIG. 6, wireless circuitry 24 may include transceiver circuitry 26 coupled to antenna 30 over signal path 28 (e.g., an optical signal path sometimes referred to herein as optical signal path 28). UTC PD 42 may be coupled between the radiating element arm(s) 36 of antenna 30 and signal path 28. Transceiver circuitry 26 may include optical components 68, amplifier circuitry such as power amplifier 76, and digital-to-analog converter (DAC) 74. Optical components 68 may include an optical receiver such as optical receiver 72 and optical local oscillator (LO) light sources (emitters) 70. LO light sources 70 may include two or more light sources such as laser light sources, laser diodes, optical phase locked loops, or other optical emitters that emit light (e.g., optical local oscillator signals LO1 and LO2) at respective wavelengths. If desired, LO light sources 70 may include a single light source and may include optical components for splitting the light emitted by the light source into different wavelengths. Signal path 28 may be coupled to optical components 68 over optical path 66. Optical path 66 may include one or more optical fibers and/or waveguides.

Signal path 28 may include an optical splitter such as optical splitter (OS) 54, optical paths such as optical path 64 and optical path 62, an optical combiner such as optical combiner (OC) 52, and optical path 40. Optical path 62 may be an optical fiber or waveguide. Optical path 64 may be an optical fiber or waveguide. Optical splitter 54 may have a first (e.g., input) port coupled to optical path 66, a second (e.g., output) port coupled to optical path 62, and a third (e.g., output) port coupled to optical path 64. Optical path 64 may couple optical splitter 54 to a first (e.g., input) port of optical combiner 52. Optical path 62 may couple optical splitter 54 to a second (e.g., input) port of optical combiner 52. Optical combiner 52 may have a third (e.g., output) port coupled to optical path 40.

An optical phase shifter such as optical phase shifter 80 may be (optically) interposed on or along optical path 64. An optical modulator such as optical modulator 56 may be (optically) interposed on or along optical path 62. Optical modulator 56 may be, for example, a Mach-Zehnder modulator (MZM) and may therefore sometimes be referred to herein as MZM 56. MZM 56 includes a first optical arm (branch) 60 and a second optical arm (branch) 58 interposed in parallel along optical path 62. Propagating optical local oscillator signal LO2 along arms 60 and 58 of MZM 56 may, in the presence of a voltage signal applied to one or both arms, allow different optical phase shifts to be imparted on each arm before recombining the signal at the output of the MZM (e.g., where optical phase modulations produced on the arms are converted to intensity modulations at the output of MZM 56). When the voltage applied to MZM 56 includes wireless data, MZM 56 may modulate the wireless data onto optical local oscillator signal LO2. If desired, the phase shifting performed at MZM 56 may be used to perform beam forming/steering in addition to or instead of optical phase shifter 80. MZM 56 may receive one or more bias voltages $W_{BIAS}$ (sometimes referred to herein as bias signals $W_{BIAS}$) applied to one or both of arms 58 and 60. Control circuitry 14 (FIG. 1) may provide bias voltage $W_{BIAS}$ with different magnitudes to place MZM 56 into different operating modes (e.g., operating modes that suppress optical carrier signals, operating modes that do not suppress optical carrier signals, etc.).

Intermediate frequency signal path 44 may couple UTC PD 42 to MZM 56 (e.g., arm 60). An amplifier such as low noise amplifier 82 may be interposed on intermediate frequency signal path 44. Intermediate frequency signal path 44 may be used to pass intermediate frequency signals SIGIF from UTC PD 42 to MZM 56. DAC 74 may have an input coupled to up-conversion circuitry, modulator circuitry, and/or baseband circuitry in a transmitter of transceiver circuitry 26. DAC 74 may receive digital data to transmit over antenna 30 and may convert the digital data to the analog domain (e.g., as data DAT). DAC 74 may have an output coupled to transmit data path 78. Transmit data path 78 may couple DAC 74 to MZM 56 (e.g., arm 60). Each of the components along signal path 28 may allow the same antenna 30 to both transmit THF signals 32 and receive THF signals 34 (e.g., using the same components along signal path 28), thereby minimizing space and resource consumption within device 10.

LO light sources 70 may produce (emit) optical local oscillator signals LO1 and LO2 (e.g., at different wavelengths that are separated by the wavelength of THF signals 32/34). Optical components 68 may include lenses, waveguides, optical couplers, optical fibers, and/or other optical components that direct the emitted optical local oscillator signals LO 1 and LO2 towards optical splitter 54 via optical path 66. Optical splitter 54 may split the optical signals on optical path 66 (e.g., by wavelength) to output optical local oscillator signal LO 1 onto optical path 64 while outputting optical local oscillator signal LO2 onto optical path 62.

Control circuitry 14 (FIG. 1) may provide phase control signals CTRL to optical phase shifter 80. Phase control signals CTRL may control optical phase shifter 80 to apply optical phase shift S to the optical local oscillator signal LO1 on optical path 64. Phase shift S may be selected to steer a signal beam of THF signals 32/34 in a desired pointing direction. Optical phase shifter 80 may pass the phase-shifted optical local oscillator signal LO1 (denoted as LO1 + S) to optical combiner 52. Signal beam steering is performed in the optical domain (e.g., using optical phase shifter 80) rather than in the THF domain because there are no satisfactory phase shifting circuit components that operate at frequencies as high as the frequencies of THF signals 32 and 34. Optical combiner 52 may receive optical local oscillator signal LO2 over optical path 62. Optical combiner 52 may combine optical local oscillator signals LO1 and LO2 onto optical path 40, which directs the optical local oscillator signals onto UTC PD 42 for use during signal transmission or reception.

During transmission of THF signals 32, DAC 74 may receive digital wireless data (e.g., data packets, frames, symbols, etc.) for transmission over THF signals 32. DAC 74 may convert the digital wireless data to the analog domain and may output (transmit) the data onto transmit data path 78 as data DAT (e.g., for transmission via antenna 30). Power amplifier 76 may amplify data DAT. Transmit data path 78 may pass data DAT to MZM 56 (e.g., arm 60). MZM 56 may modulate data DAT onto optical local oscillator signal LO2 to produce modulated optical local oscillator signal LO2' (e.g., an optical local oscillator signal at the frequency/wavelength of optical local oscillator signal LO2 but that is modulated to include the data identified by data DAT). Optical combiner 52 may combine optical local oscillator signal LO1 with modulated optical local oscillator signal LO2' at optical path 40.

Optical path 40 may illuminate UTC PD 42 with (using) optical local oscillator signal LO1 (e.g., with the phase shift S applied by optical phase shifter 80) and modulated optical local oscillator signal LO2'. Control circuitry 14 (FIG. 1) may apply a control signal $V_{BIAS}$ to UTC PD 42 that configures antenna 30 for the transmission of THF signals 32. UTC PD 42 may convert optical local oscillator signal LO1 and modulated optical local oscillator signal LO2' into antenna currents on radiating element arm(s) 36 at the frequency of THF signals 32 (e.g., while programmed for transmission using control signal $V_{BIAS}$). The antenna currents on radiating element arm(s) 36 may radiate THF signals 32. The frequency of THF signals 32 is given by the difference in frequency between optical local oscillator signal LO1 and modulated optical local oscillator signal LO2'. Control signals $V_{BIAS}$ may control UTC PD 42 to preserve the modulation from modulated optical local oscillator signal LO2' in the radiated THF signals 32. External equipment that receives THF signals 32 will thereby be able to extract data DAT from the THF signals 32 transmitted by antenna 30.

During reception of THF signals 34, MZM 56 does not modulate any data onto optical local oscillator signal LO2. Optical path 40 therefore illuminates UTC PD 42 with optical local oscillator signal LO1 (e.g., with phase shift S) and optical local oscillator signal LO2. Control circuitry 14 (FIG. 1) may apply a control signal $V_{BIAS}$ (e.g., a bias voltage) to UTC PD 42 that configures antenna 30 for the receipt of THF signals 32. UTC PD 42 may use optical local oscillator signals LO1 and LO2 to convert the received THF signals 34 into intermediate frequency signals SIGIF output onto intermediate frequency signal path 44 (e.g., while programmed for reception using bias voltage $V_{BIAS}$-). Intermediate frequency signals SIGIF may include the modulated data from the received THF signals 34. Low noise amplifier 82 may amplify intermediate frequency signals SIGIF, which are then provided to MZM 56 (e.g., arm 60). MZM 56 may convert intermediate frequency signals SIGIF to the optical domain as optical signals LOrx (e.g., by modulating the data in intermediate frequency signals SIGIF onto one of the optical local oscillator signals) and may pass the optical signals to optical receiver 72 in optical components 68, as shown by arrow 63 (e.g., via optical paths 62 and 66 or other optical paths). Control circuitry 14 (FIG. 1) may use optical receiver 72 to convert optical signals LOrx to other formats and to recover (demodulate) the data carried by THF signals 34 from the optical signals. In this way, the same antenna 30 and signal path 28 may be used for both the transmission and reception of THF signals while also performing beam steering operations.

The example of FIG. 6 in which intermediate frequency signals SIGIF are converted to the optical domain is merely illustrative. If desired, transceiver circuitry 26 may receive and demodulate intermediate frequency signals SIGIF without first passing the signals to the optical domain. For example, transceiver circuitry 26 may include an analog-to-digital converter (ADC), intermediate frequency signal path 44 may be coupled to an input of the ADC rather than to MZM 56, and the ADC may convert intermediate frequency signals SIGIF to the digital domain. As another example, intermediate frequency signal path 44 may be omitted and control signals $V_{BIAS}$ may control UTC PD 42 to directly sample THF signals 34 with optical local oscillator signals LO1 and LO2 to the optical domain. As an example, UTC PD 42 may use the received THF signals 34 and control signals $V_{BIAS}$ to produce an optical signal on optical path 40. The optical signal may have an optical carrier with sidebands that are separated from the optical carrier by a fixed frequency offset (e.g., 30-100 GHz, 60 GHz, 50-70 GHz, 10-100 GHz, etc.). The sidebands may be used to carry the modulated data from the received THF signals 34. Signal path 28 may direct (propagate) the optical signal produced by UTC PD 42 to optical receiver 72 in optical components 68 (e.g., via optical paths 40, 64, 62, 66, 63, and/or other optical paths). Control circuitry 14 (FIG. 1) may use optical receiver 72 to convert the optical signal to other formats and to recover (demodulate) the data carried by THF signals 34 from the optical signal (e.g., from the sidebands of the optical signal). If desired, antenna 30 may be integrated into an access point 45.

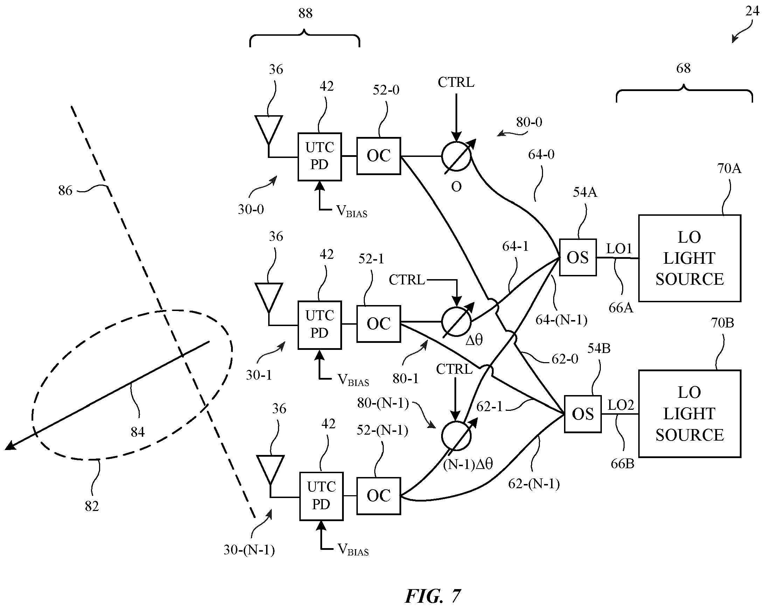

FIG. 7 is a circuit diagram showing one example of how multiple antennas 30 may be integrated into a phased antenna array 88 that conveys THF signals over a corresponding signal beam. In the example of FIG. 7, MZMs 56, intermediate frequency signal paths 44, data paths 78, and optical receiver 72 of FIG. 6 have been omitted for the sake of clarity. Each of the antennas in phased antenna array 88 may alternatively sample received THF signals directly into the optical domain or may pass intermediate frequency signals SIGIF to ADCs in transceiver circuitry 26.

As shown in FIG. 7, phased antenna array 88 includes N antennas 30 such as a first antenna 30-0, a second antenna 30-1, and an Nth antenna 30-(N-1). Each of the antennas 30 in phased antenna array 88 may be coupled to optical components 68 via a respective optical signal path (e.g., optical signal path 28 of FIG. 6). Each of the N signal paths may include a respective optical combiner 52 coupled to the UTC PD 42 of the corresponding antenna 30 (e.g., the UTC PD 42 in antenna 30-0 may be coupled to optical combiner 52-0, the UTC PD 42 in antenna 30-1 may be coupled to optical combiner 52-1, the UTC PD 42 in antenna 30-(N-1) may be coupled to optical combiner 52-(N-1), etc.). Each of the N signal paths may also include a respective optical path 62 and a respective optical path 64 coupled to the corresponding optical combiner 52 (e.g., optical paths 64-0 and 62-0 may be coupled to optical combiner 52-0, optical paths 64-1 and 62-1 may be coupled to optical combiner 52-1, optical paths 64-(N-1) and 62-(N-1) may be coupled to optical combiner 52-(N-1), etc.).

Optical components 68 may include LO light sources 70 such as a first LO light source 70A and a second LO light source 70B. The optical signal paths for each of the antennas 30 in phased antenna array 88 may share one or more optical splitters 54 such as a first optical splitter 54A and a second optical splitter 54B. LO light source 70A may generate (e.g., produce, emit, transmit, etc.) first optical local oscillator signal LO1 and may provide first optical local oscillator signal LO1 to optical splitter 54A via optical path 66A. Optical splitter 54A may distribute first optical local oscillator signal LO1 to each of the UTC PDs 42 in phased antenna array 88 over optical paths 64 (e.g., optical paths 64-0, 64-1, 64-(N-1), etc.). Similarly, LO light source 70B may generate (e.g., produce, emit, transmit, etc.) second optical local oscillator signal LO2 and may provide second optical local oscillator signal LO2 to optical splitter 54B via optical path 66B. Optical splitter 54B may distribute second optical local oscillator signal LO2 to each of the UTC PDs 42 in phased antenna array 88 over optical paths 62 (e.g., optical paths 62-0, 62-1, 62-(N-1), etc.).

A respective optical phase shifter 80 may be interposed along (on) each optical path 64 (e.g., a first optical phase shifter 80-0 may be interposed along optical path 64-0, a second optical phase shifter 80-1 may be interposed along optical path 64-1, an Nth optical phase shifter 80-(N-1) may be interposed along optical path 64-(N-1), etc.). Each optical phase shifter 80 may receive a control signal CTRL that controls the phase S provided to optical local oscillator signal LO1 by that optical phase shifter (e.g., first optical phase shifter 80-0 may impart an optical phase shift of zero degrees/radians to the optical local oscillator signal LO1 provided to antenna 30-0, second optical phase shifter 80-1 may impart an optical phase shift of $\Delta\phi$ to the optical local oscillator signal LO1 provided to antenna 30-1, Nth optical phase shifter 80-(N-1) may impart an optical phase shift of $(N-1)\Delta\phi$ to the optical local oscillator signal LO1 provided to antenna 30-(N-1), etc.). By adjusting the phase S imparted by each of the N optical phase shifters 80, control circuitry 14 (FIG. 1) may control each of the antennas 30 in phased antenna array 88 to transmit THF signals 32 and/or to receive THF signals 34 within a formed signal beam 83. Signal beam 83 may be oriented in a particular beam pointing direction (angle) 84 (e.g., the direction of peak gain of signal beam 83). The THF signals conveyed by phased antenna array 88 may have wavefronts 86 that are orthogonal to beam pointing direction 84. Control circuitry 14 may adjust beam pointing direction 84 over time to point towards external communications equipment or an external object or to point away from external objects, as examples.

In the example of FIG. 7, there is one optical phase shifter 80 in wireless circuitry 24 for each antenna 30 (e.g., a respective optical phase shifter may be coupled to each antenna 30). However, optical phase shifters 80 may consume a relatively large amount of space and resources in device 10. It would therefore be desirable to be able to minimize the number of optical phase shifters in wireless circuitry 24 while still allowing phased antenna array 88 to form signal beam 82 in different beam pointing directions.

First consider a single isotropic radiator (e.g., antenna 30). Such a radiator has a radiated field that is proportional to exp(-j*k*r)/(4π*r). Hence, the radiation intensity associated with the radiator is constant (isotropic). The unnormalized array factor (AF) of such a radiator is AF = 1. Now consider a one-dimensional phased antenna array having a single row of W antennas (e.g., antennas 30) that receive a plane wave incident at an angle θ relative to the plane of the array. Each element in the array (each antenna) is excited with a signal at a given amplitude (e.g., 1), but because the transmission paths between elements are not equal, the phase shift of each element will be different. As such, the array factor for such an arrangement is equal to AF = exp(j*$\xi_0$) + exp(j*$\xi_1$) + exp(j*$\xi_2$) + ... + exp(j*$\xi_W$), where $\xi_i$ is the phase of an incoming plane wave at each respective (e.g., ith) element (e.g., references to some point such as the origin) and j is the square root of -1. Hence, the phase of the wave arriving at the ith element leads the phase of the wave arriving at the origin by the corresponding $\xi_i$.

Next consider the case where all the antennas in the array are separated by the same distance d, leading to a linear array of total length D = (W - 1)d. Such an array is sometimes referred to as an equally or uniformly spaced linear array (ULA). Since the excitation is uniform, the array may also be referred to as a uniformly excited ULA. The phase of element i + 1 leads the phase of element i by k*d*cos(θ), since the path length to element i + 1 is d*cos(θ) meters longer than that to element i. Setting the reference point to element i = 0 allows the array factor to be written according to equation 1.

$$AF = 1 + e^{jkdcos(\theta)} + e^{jk2dcos(\theta)} + \cdots + e^{jk(W-1)dcos(\theta)} = \sum_{i=0}^{W-1} e^{jkidcos(\delta\theta)} = \sum_{i=0}^{W-1} e^{jki\frac{D}{W-1}cos(\theta)}$$

$$(1)$$

Defining k*d*cos(θ) as φ, the array factor simplifies as shown in equation 2.

$$AF = \sum_{i=0}^{W-1} e^{ji\varphi} = 1 + e^{j\varphi} + e^{j2\varphi} + \cdots + e^{j(W-1)\varphi} \qquad (2)$$

As shown in equation 2, the array factor AF is a function of φ and resembles a Fourier Series where the array factor includes a set of sinusoids at multiples of a fundamental frequency φ. Note that because of reciprocity, the array functions similarly in transmit mode except the direction of the phase gradient is reversed to produce a plane wave leaving the array.

Next, consider a two-dimensional planar array having elements (antennas) arranged uniformly in a rectangular grid in an X-Y plane, with element spacing $d_x$ along the x-axis and element spacing $d_y$ along the y-axis. Since the arrangement is Cartesian (e.g., matrix-like), it is useful to use two indices to refer to the elements: a row index m (e.g., varying along the x-axis) and a column index n (e.g., varying along the y-axis). There may be M total rows and N total columns. The position vector for the mth and nth element is then defined as $r_{mn} = x'_{mn}\hat{x} + y'_{mn}\hat{y}$. If the array begins at the origin, the position vector can be rewritten as $r'_{mn} = md_x\hat{x} + nd_y\hat{y}$. The array factor AF may then be split into two summations along each dimension, written in spherical coordinates as shown in equation 3.

$$AF(\theta, \phi) = \sum_{n=0}^{N-1} \sum_{m=0}^{M-1} I_{mn} e^{jk(md_x sin\theta cos\phi + nd_y sin\theta cos\phi)} \qquad (3)$$

In equation 3, $I_{mn}$ denotes the excitation amplitude of the mth and nth element of the array, and is assumed to be a real number yielding broadside radiation. The array factor is said to be separable if the excitations are such that $I_{mn} = I_{mx}I_{yn}$. That is, the excitation is the product of two functions, one describing variation along the x-axis and another describing variation along the y-axis. A uniform amplitude but progressive phase shifts may be applied in each direction such that $I_{mx} = I_0 exp(jma_x)$ and $I_{yn} = I_0 exp(jna_y)$, where $a_x$ and $a_y$ are the phase gradients in the x and y directions, respectively. This may allow equation 3 to be rewritten as shown in equation 4.

$$AF(\theta, \phi) = I_0 \sum_{m=0}^{M-1} e^{jk(md_x sin\theta cos\phi + a_x)} \sum_{n=0}^{N-1} e^{jk(nd_y sin\theta sin\phi + a_y)} \qquad (4)$$

As shown by equation 4, the array factor may be a product of two linear array factors, one along the vertical dimension (e.g., rows) and the other along the horizontal dimension (e.g., columns). This means that the beamwidths in each of the principal directions of the array may be determined by a linear array along the corresponding direction.

Next consider phased antenna array 88 of FIG. 7, which operates using optical local oscillator signals, in an example where the array includes four antennas 30-1, 30-2, 30-3, and 30-4 arranged in a linear pattern and coupled to respective optical phase shifters 80-1, 80-2, 80-3, and 80-4. The amplitude of optical local oscillator signal LO1 is represented by $E_{LO1}(t)$ and the amplitude of optical local oscillator signal LO2 is represented by $E_{LO2}$. The complex amplitudes of the optical signals at the inputs of photodiodes 42 are denoted by $E_1(t)$, $E_2(t)$, $E_3(t)$, and $E_4(t)$ for each of antennas 30-1, 30-2, 30-3, and 30-4, respectively. The photocurrents at the outputs of the photodiodes (e.g., on the antenna radiating element arms 36 of the four antennas) are represented by $i_{ph,1}(t)$, $i_{ph,2}(t)$, $i_{ph,3}(t)$, and $i_{ph,4}(t)$ for each of antennas 30-1, 30-2, 30-3, and 30-4, respectively. The frequency of a first optical local oscillator signal is denoted as $\omega_1$ and the frequency of a second optical local oscillator signal is denoted as $\omega_2$. The delay provided to antenna 30-1 by phase shifter 80-1 is denoted as $\tau_1$, the delay provided to antenna 30-2 by phase shifter 80-2 is denoted as $\tau_2$, the delay provided to antenna 30-3 by phase shifter 80-3 is denoted as $\tau_3$, and the delay provided to antenna 30-4 by phase shifter 80-4 is denoted as $\tau_4$.

Ideal photodiodes perform a linear conversion from optical power to photocurrent, so the photocurrent at the output of photodiodes 42 may be represented by the equation $i_{ph}(t) = \mathcal{F}^{-1}\{\mathfrak{R}(\omega) \cdot \mathcal{F}\{|E(t)|^2\}\}$, where $\mathfrak{R}(\omega)$ is the frequency dependent responsivity, E(t) is the complex optical amplitude at the input, and $\mathcal{F}$ is the Fourier transform function. The complex amplitudes $E_n(t)$ at the input of each photodiode in a $2^N$ element array can be calculated using equation 5.

$$E_n(t) = \frac{1}{2^{\frac{N+1}{2}}} \cdot \left(j^{k(n)} E_{LO1} \cdot e^{j\omega_1(t-\tau_n)} + j^{k(n)+1} E_{LO2} \cdot e^{j\omega_2(t)}\right) \qquad (5)$$

In equation 5, $1 \leq n \leq 2^N$ and k(n) denotes the number of ones in the binary representation of (n-1). In this case, the photocurrents $i_{ph,n}(t)$ at the outputs of the photodiodes is given by equation 6.

$$i_{ph,n}(t) = \frac{\mathfrak{R}_{DC}}{2^{N+!}} \cdot (E_{LO1}^2 + E_{LO2}^2) - \frac{\mathfrak{R}(\Delta\omega)}{2^N} \cdot E_{LO1}E_{LO2} \cdot \sin(\Delta\omega + \omega_1\tau_n) \qquad (6)$$

In equation 6, $1 \leq n \leq 2^N$, $\Delta\omega = \omega_2 - \omega_1$, and $\mathfrak{R}_{DC}$ is the photodiode responsivity at DC. The time delays $\tau_N$ applied in the optical domain yield phase shifts $\omega_1\tau_N$ in the electrical domain, so optical phase shifters 80 can be used to adjust the electric phases in phased antenna array 88. Specifically, the phase increment $\Delta\varphi_n$, between two adjacent radiators is given by $\Delta\varphi_n = \omega_1 \cdot (\tau_{n+1} - \tau_n)$, where $1 \le n \le 2^N - 1$.

Whether a photonic beam steering transmitter operates as a true time delay (TTD) or in a phase shift mode is primarily dictated by the location of the delay elements in the photonic network. In the TTD case, the delays $\tau_N$ are applied to the sum of both optical carriers. Modeling the Mach-Zehnder modulator (MZM) (e.g., MZM 58 of FIG. 6) as an ideal multiplier, the resulting photocurrents are given by $i_{ph,n} \propto x_{BB}(t - \tau_n)\sin[(\omega_1 - \omega_2)(t - \tau_n)]$. The delays applied in the optical domain translate directly into the electrical domain. In the phase shift case, the delays $\tau_N$ are applied to one of the optical carriers only, resulting in photocurrent of the form $i_{ph,n} \propto x_{BB}(t - \tau_n)\sin[(\omega_1 - \omega_2)t - \omega_1 \cdot \tau_n]$. The phase shifts $\omega_n \cdot \tau_n$ applied in the optical domain translate directly into the electrical domain and do not depend on the RF frequency. For applications with large instantaneous bandwidth, such as wideband communications, the TTD approach is generally preferred because it does not exhibit beam squint of pulse dispersion.

This principle may be used for optoelectronic THz wave beam steering, as shown in the example of FIG. 7. In these cases, a first light source generates a first light wave with frequency $\omega_1$ and phase $\varphi_1$ whereas a second light source generates a second light wave with frequency $\omega_2$ and phase $\varphi_2$. The electric field of the first light wave is described by $E_1(t) = C_1\exp(j(\omega_1 t + \varphi_1))$, where $C_1$ is the electric field amplitude. The electric field of the second light wave is described by $E_2(t) = C_2\exp(j(\omega_2 t + \varphi_2))$, where $C_2$ is the electric field amplitude. At first, each light wave is equally split into N channels. Then, a gradient optical phase offset ($k\Delta\phi$, k = 0, 1, 2, ..., N-1) is introduced to the light wave $E_1$ in each channel. After that, each phase-gradient light wave $E_1$ is coupled with the phase-consistent light wave $E_2$. Finally, each pair of light waves is fed into the corresponding UTC-PD. The AC photocurrent generated by the UTC-PD based on photo-mixing can be expressed as $i \propto rC_1C_2\cos[(\omega_1 - \omega_2)t + (\varphi_1 - k\Delta\phi - \varphi_2)]$, where r is the responsivity of the UTC-PD. If the phase of the light wave ($k\Delta\phi$) is changed before it reaches the UTC-PD, the identical phase variation ($k\Delta\phi$) will be introduced at the generated THF wave. Therefore, the phase of the THF wave can be controlled by the phase shift of the light wave before the photo mixing process. Here, it is assumed that the antennas are equally spaced with distance d in the array. Distance d is less than or equal to half the effective wavelength of operation of the antenna. This assumption may be approximated as $\Delta\phi = (2\pi/\lambda)*d*\sin(\theta)$, where $\lambda$ is the wavelength of the radiated carrier wave. Consequently with the aligned optical phase offset $\Delta\phi$ of the light waves between adjacent channels, a beam steering angle $\theta$ of the THF wave can be obtained. With this approach, the same number of phase shifters are required as there are antennas 30 in the array. Hence, a phased antenna array 88 having N x N antennas 30 will ordinarily require $N^2$ optical phase shifters to perform beam steering. As N becomes large, the number of required optical phase shifters becomes accordingly larger. It may therefore be desirable to be able to reduce the number of optical phase shifters used to perform THF signal beam steering for phased antenna array 88.

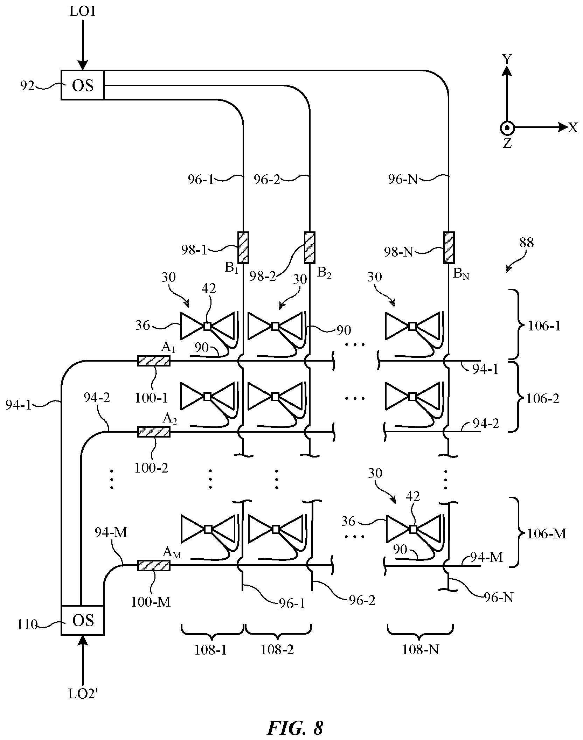

If desired, two or more antennas 30 in phased antenna array 88 may share a corresponding optical phase shifter, thereby allowing for a reduction in the total number of optical phase shifters used to form the signal beam. FIG. 8 is a diagram of phased antenna array 88 having shared optical phase shifters.

As shown in FIG. 8, phased antenna array 88 may include a set of M x N antennas 30 (e.g., the antennas may be arranged in a rectangular grid pattern). The antennas 30 in phased antenna array 88 may, for example, be arranged in M first sets such as M rows 106 (e.g., a first row 106-1, a second row 106-2, an Mth row 106-M, etc.). The antennas 30 in phased antenna array 88 may also be arranged in N second sets (e.g., each antenna may belong to both one of the first sets and one of the second sets) such as N columns 108 (e.g., a first column 108-1, a second column 108-2, an Nth column 108-N, etc.). In other words, each column 108 may include N antennas 30 and each row 106 may include M antennas 30.

Phased antenna array 88 may be fed using optical local oscillator signals LO1 and LO2' (e.g., optical local oscillator signal LO2 that has been modulated with wireless data). Optical splitter 110 (e.g., optical splitter 54B of FIG. 7) may receive modulated optical local oscillator signal LO2'. Optical splitter 110 may be coupled to each row 106 of phased antenna array 88 via optical paths 94 (sometimes referred to herein as row lines 94). Optical paths 94 may include optical fibers and/or waveguides. For example, a first optical path 94-1 may couple optical splitter 110 to each of the antennas 30 in row 106-1, a second optical path 94-2 may couple optical splitter 110 to each of the antennas 30 in row 106-2, an Mth optical path 94-M may couple optical splitter 110 to each of the antennas 30 in row 106-M, etc.

Similarly, optical splitter 92 may be coupled to each column 108 of phased antenna array 88 via optical paths 96 (sometimes referred to herein as column lines 96). Optical paths 96 may include optical fibers and/or waveguides. For example, a first optical path 96-1 may couple optical splitter 92 to each of the antennas 30 in column 108-1, a second optical path 96-2 may couple optical splitter 92 to each of the antennas 30 in column 108-2, an Nth optical path 96-N may couple optical splitter 92 to each of the antennas 30 in column 108-N, etc. The example of FIG. 8 in which the rows 106 of phased antenna array 88 are fed using the modulated optical local oscillator signal (e.g., modulated optical local oscillator signal LO2') is merely illustrative. If desired, wireless data may be modulated onto optical local oscillator signal LO1 for providing to each of the columns 108 of phased antenna array 88. If desired, both optical local oscillator signals may be unmodulated (e.g., for receiving THF signals using phased antenna array 88).

As shown in FIG. 8, there may be an optical phase shifter 100 (e.g., optical phase shifter 88 of FIGS. 6 and 7) disposed on each optical path 94 prior to phased antenna array 88. For example, a first optical phase shifter 100-1 may be disposed on optical path 94-1, a second optical phase shifter 100-2 may be disposed on optical path 94-2, an Mth optical phase shifter 100-M may be disposed on optical path 94-M, etc. There may also be an optical phase shifter 98 (e.g., optical phase shifter 88 of FIGS. 6 and 7) disposed on each optical path 96 prior to phased antenna array 88. For example, a first optical phase shifter 98-1 may be disposed on optical path 96-1, a second optical phase shifter 98-2 may be disposed on optical path 96-2, an Nth optical phase shifter 98-N may be disposed on optical path 96-N, etc. Optical phase shifters 98 and 100 may, for example, include thermal phase shifters that are heated to adjust the optical length of optical paths 94 and 96, thereby imparting an optical phase shift to the optical local oscillator signals on the optical paths.

Each antenna 30 in phased antenna array 88 may include an antenna radiating element such as an antenna radiating element having antenna radiating element arms 36. Each antenna 30 may also include a UTC PD 42 coupled to antenna radiating element arms 36. UTC PD 42 may be illuminated with optical LO signals using optical coupler 90. Optical coupler 90 may include a first arm that is optically coupled to a corresponding optical path 94 for coupling modulated optical signal LO2' onto UTC PD 42 and may include a second arm that is optically coupled to a corresponding optical path 96 for coupling optical local oscillator signal LO1 onto UTC PD 42. The optical local oscillator signals may control photodiode 42 to produce photocurrent on antenna radiating element arms 36 (e.g., for transmitting THF signals).

If desired, the length of each arm of optical coupler 90 may vary at different antenna positions (e.g., positions (m,n)) across the area of phased antenna array 88 to provide all of the antennas 30 in phased antenna array 88 with a uniform amount of optical power despite being located at different positions along optical paths 94 and 96. For example, antennas 30 located within closer rows 106 and closer columns 108 to optical phase shifters 100 and 98 may include shorter arms in optical coupler 90 than the antennas 30 located in farther rows 106 and farther columns 108, thereby preventing excessive optical power from being coupled out of the optical paths at closer antenna locations prior to reaching farther antenna locations. This may serve to provide each antenna 30 with a uniform amount of optical power in the optical local oscillator signals.

During signal transmission, modulated optical local oscillator signal LO2' may be provided to each row 106 of antennas 30 over optical paths 94. At the same time, optical local oscillator signal LO1 may be provided to each column 108 of antennas 30 over optical paths 96. Control signals provided to optical phase shifters 100 (e.g., control signals CTRL of FIGS. 6 and 7) may control optical phase shifters 100 to adjust the optical phase imparted to the modulated optical local oscillator signal LO2' provided to each row 106. For example, a first optical phase shift may be applied to modulated optical local oscillator signal LO2' on path 94-1 (e.g., using optical phase shifter 100-1) to produce a phase shifted signal $A_1$ (e.g., a phase-shifted version of optical LO signal LO2') that is used to feed the antennas 30 located in row 106-1, a second optical phase shift may be applied to modulated optical local oscillator signal LO2' on path 94-2 (e.g., using optical phase shifter 100-2) to produce a phase shifted signal $A_2$ that is used to feed the antennas 30 located in row 106-2, an Mth optical phase shift may be applied to modulated optical local oscillator signal LO2' on path 94-M (e.g., using optical phase shifter 100-M) to produce a phase shifted signal $A_M$ that is used to feed the antennas 30 located in row 106-M, etc. These optical phase shifts may be selected so that rows 106 collectively form a signal beam that is oriented at a selected beam pointing angle within the Y-Z plane (e.g., different optical phases may be provide across rows 106 to steer a first degree of freedom of the three-dimensional signal beam that is produced by phased antenna array 88).

At the same time, control signals provided to optical phase shifters 98 (e.g., control signals CTRL of FIGS. 6 and 7) may control optical phase shifters 98 to adjust the optical phase imparted to the optical local oscillator signal LO1 provided to each column 108. For example, a first optical phase shift may be applied to modulated local oscillator signal LO1 on path 96-1 (e.g., using optical phase shifter 98-1) to produce a phase shifted signal $B_1$ (e.g., a phase-shifted version of optical LO signal LO1) that is used to feed the antennas 30 located in column 108-1, a second optical phase shift may be applied to optical local oscillator signal LO 1 on path 96-2 to produce a phase shifted signal $B_2$ that is used to feed the antennas 30 located in column 109-2, an Nth optical phase shift may be applied to optical local oscillator signal LO 1 on path 96-N to produce a phase shifted signal $B_N$ that is used to feed the antennas 30 located in column 108-N, etc. These optical phase shifts may be selected so that columns 108 collectively form a signal beam that is oriented at a selected beam pointing angle within the X-Z plane (e.g., different optical phases may be provide across columns 108 to steer a second degree of freedom of the three-dimensional signal beam that is produced by phased antenna array 88).

In other words, each antenna 30 may share a first optical phase shift with each other antenna 30 in its row (e.g., may share an optical phase shifter 100) and may share a second optical phase shift with each other antenna 30 in its column (e.g., may share an optical phase shifter 98). The optical phase shifts imparted by optical phase shifters 100 (sometimes referred to herein as a first set of optical phase shifts) and the optical phase shifts imparted by optical phase shifters 98 (sometimes referred to herein as a second set of optical shifts) may respectively control the beam pointing direction of the signal beam of THF signals formed by phased antenna array 88 within different orthogonal degrees of freedom. Put differently, the optical phasing of rows 106 and the optical phasing of columns 108 may be programmed to configure phased antenna array 88 to produce a single combined THF signal beam (e.g., using modulated local oscillator signal LO2' and optical local oscillator signal LO1) oriented in a selected beam pointing direction within the hemisphere over the array. Sharing optical phase shifters 100 and sharing optical phase shifters 98 in this way may allow phased antenna array 88 to perform three-dimensional beam steering using only N + M total optical phase shifters, which is significantly fewer than the N x M total optical phase shifters required when each antenna 30 is independently phased using a respective phase shifter. This may serve to reduce the area and resource consumption of phased antenna array 88 while still allowing the phased antenna array to perform three-dimensional signal beam steering.

Mathematically, the electric field entering the mth row 106 of phased antenna array 88 is represented as $E_m = a_m e^{j\phi_m} \cdot e^{j\omega_1 t}$ and the electric field entering the nth column 108 of phased antenna array 88 is represented as $E_n = b_n e^{j\theta_n} \cdot e^{j\omega_2 t}$ where $a_m$ is the amplitude of the optical field in the mth row 106, $b_n$ is the amplitude of the optical signal in the nth column 108, $\phi_m$ is the phase of the optical signal in the mth row 106 (e.g., as imparted by the mth optical phase shifter 100-m), $\theta_n$ is the phase of the optical signal in the nth column 108 (e.g,. as imparted by the nth optical phase shifter 98-n), $\omega_1$ is the angular carrier frequency of modulated optical local oscillator signal LO2', and $\omega_2$ is the angular carrier frequency of optical local oscillator signal LO1. For example, the phase shifted signal $A_1$ provided to row 106-1 may be given by $A_1 = a_1 e^{j\phi_1} \cdot e^{j\omega_1 t}$, the phase shifted signal $A_2$ provided to row 106-2 may be given by $A_2 = a_2 e^{j\phi_2} \cdot e^{j\omega_1 t}$, the phase shifted signal $A_M$ provided to row 106-M may be given by $A_M = a_M e^{j\phi_M} \cdot e^{j\omega_1 t}$, the phase shifted signal $B_1$ provided to column 108-1 may be given by $B_1 = b_1 e^{j\theta_1} \cdot e^{j\omega_2 t}$, the phase shifted signal $B_2$ provided to column 108-2 may be given by $B_2 = b_2 e^{j\theta_2} \cdot e^{j\omega_2 t}$, the phase shifted signal $B_N$ provided to column 108-N may be given by $B_N = b_N e^{j\theta_N} \cdot e^{j\omega_2 t}$, etc.

A complex data modulation $x_{BB}(t)$ (e.g., carrying wireless data DAT) is added to the optical signals provided to each row 106 (e.g., within modulated optical local oscillator LO2') but is omitted from the equations described herein for the sake of simplicity. If desired, complex data modulation $x_{BB}(t)$ may be modulated onto the optical local oscillator signal provided to columns 108 rather than to rows 106 (e.g., to optical local oscillator signal LO1 or alternatively, modulated optical local oscillator signal LO2' may be provided to optical splitter 92 whereas optical local oscillator signal LO1 is provided to optical splitter 110).

For each antenna (pixel) located at position (m,n), the combined optical signal from the corresponding optical path 94-m (row) and the corresponding optical path 96-n (column) is represented by equation 7.

$$E_{mn} = \frac{a_m}{M} \cdot e^{j\phi_m} \cdot e^{j\omega_1 t} + \frac{b_n}{N} \cdot e^{j\theta_n} \cdot e^{j\omega_2 t} \qquad (7)$$

Assuming that frequencies $\omega_2$ and $\omega_1$ are near-infrared frequencies, where the difference between frequencies $\omega_2$ and $\omega_1$ gives the frequency of the THF signals conveyed by the corresponding antenna radiating element arms 36 (e.g., 275 GHz or other frequencies), this combined optical signal may cause UTC PD 42 to generate AC photocurrent i, based on the principle of photo-mixing, as expressed by equation 8 for the antenna at position (m,n).

$$i \propto \frac{a_m b_n}{M \cdot N} \cos[(\omega_1 - \omega_2)t + (\phi_m - \theta_n)] \qquad (8)$$

Amplitudes $a_m$ and $b_n$ may be equal with equal power distributing and/or the pixel amplitudes can be generated equally by selecting appropriate lengths for the arms of the optical coupler 90 at each antenna position (m,n). By choosing optical phase shifts $\phi_m$ for each row 106 and optical phase shifts $\theta_n$ for each column 108, a corresponding signal beam may be formed in a desired beam steering direction and an overall desired array factor AF can be obtained.

The example of FIG. 8 is merely illustrative. The antennas 30 in phased antenna array 88 need not be arranged in a rectangular grid pattern having rows 106 and columns 108. In general, the antennas 30 in phased antenna array 88 may be arranged in any desired pattern (e.g., where rows 106 become sets 106 of antennas with any desired relative positioning that share a first optical local oscillator signal with the same phase and where columns 108 become sets 108 of antennas with any desired relative positioning that share a second optical local oscillator signal with the same phase). Such patterns may include circular patterns (e.g., ring-shaped patterns or patterns of concentric rings), ULA patterns, non-uniform patterns, sparse and/or distributed patterns, etc. As one example, phased antenna array 88 may include one or more antennas 30 disposed at one or more different corners of device 10.

If desired, a flexible array excitation $I_{mn}$ may be provided in the row and column domain (e.g., not per pixel). If desired, phased antenna array 88 may be configured to concurrently handle multiple THF wavelengths (e.g., for performing carrier aggregation). If desired, the optical local oscillator signal provided to each column may be modulated with wireless data instead of the optical local oscillator signal provided to each row. In the example of FIG. 8, phased antenna array 88 is illustrated in a transmit mode, in which phased antenna array 88 uses modulated optical local oscillator signal LO2' and optical local oscillator signal LO1 to transmit THF signals. If desired, phased antenna array 88 may additional or alternatively receive THF signals. For example, control signals (e.g., bias voltages $V_{BIAS}$) provided to the UTC PDs 42 may configure the antennas to receive THF signals and to convert the THF signals to the optical domain or to intermediate frequencies using first and second un-modulated optical local oscillator signals provided over optical paths 96 and 94, respectively. In examples where the UTC PDs convert to intermediate frequencies, the difference in frequencies $\omega_2$ and $\omega_1$ may be equal to the intermediate frequency. The optical phase shifts provided by optical phase shifters 100 and 98 may configure phased antenna array 88 to receive THF signals in a selected beam pointing direction (e.g., the angle-of-arrival of the incident THF signals).

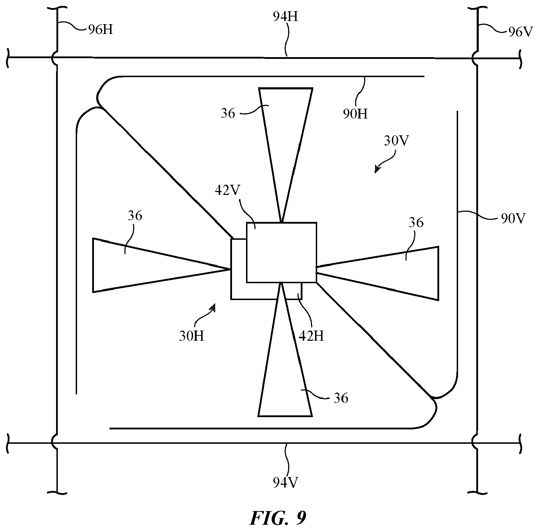

If desired, one or more of the antennas 30 in phased antenna array 88 of FIG. 8 may be a dual-polarization antenna. FIG. 9 is a diagram showing an example of a dual-polarization antenna that may be integrated into phased antenna array 88. As shown in FIG. 9, one or more pixel positions in phased antenna array 88 may include an antenna 30V for covering a first polarization (e.g., a first linear polarization such as a vertical polarization) and may include an overlapping antenna 30H for covering a second polarization different from or orthogonal to the first polarization (e.g., a second linear polarization such as a horizontal polarization). Antenna 30V may have a UTC PD 42V coupled to optical coupler 90V. Antenna 30H may have a UTC PD 42H coupled to optical coupler 90H. Antenna 30V and optical coupler 90V may be formed in a separate layer of an underlying substrate from antenna 30H and optical coupler 90H, for example.

In examples where each polarization is used to convey a respective stream of wireless data (e.g., where antenna 30H conveys data $x_{BB,H}$ and antenna 30V conveys data $x_{BB,V}$) phased antenna array 88 may include optical paths 94H and 96H for feeding the optical coupler 90H of antenna 30H and may include optical paths 94V and 96V for feeding the optical coupler 90V of antenna 30V (e.g., phased antenna array 88 may include respective optical paths 94 for vertically polarized signals and horizontally polarized signals and may include respective optical paths 96 for vertically polarized signals and horizontally polarized signals). As the data modulation is only served from either a row or column (e.g., column), assuming the same array steering direction for vertical and horizontal polarizations, the row optical paths 94 could serve both polarizations, with the limitation that the input power has to be doubled to serve both polarizations. These examples are merely illustrative. If desired, both polarizations may be used to convey the same stream of wireless data $x_{BB}$. In these scenarios, the same optical path 96 may feed both optical couplers 90H and 90V and the same optical path 94 may feed both optical couplers 90H and 90V.

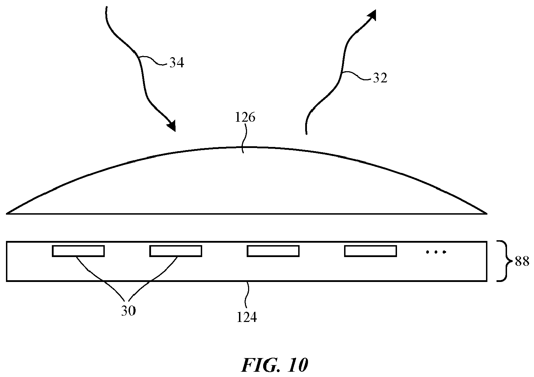

If desired, additional material can be provided to antenna(s) 30 to help antenna(s) 30 to focus the transmitted, reflected, and/or reflected THF signals. For example, a THz lens may be provided in device 10 to help antenna(s) 30 to focus the transmitted, received, and/or reflected THF signals. FIG. 10 is a cross-sectional side view showing one example of how device 10 may include a THz lens to help antenna(s) 30 to focus transmitted, received, and/or reflected THF signals.

As shown in FIG. 10, one or more antennas 30 (e.g., phased antenna array 88) may be disposed on or within a substrate 124. A THz lens such as THz lens 126 may be mounted on or over substrate 124. THz lens 126 may overlap at least some (e.g., all) of the antennas 30 on substrate 124. THz lens 126 may serve to focus THz signals 34 onto antennas 30 and/or to focus transmitted THF signals 32 in a particular direction (e.g., within a corresponding signal beam). This example is merely illustrative. Multiple THz lenses may be used to focus THz signals for different antennas and/or multiple THz lenses may be used to focus THz signals for one or more antennas. THz lens 126 may have any desired shape.

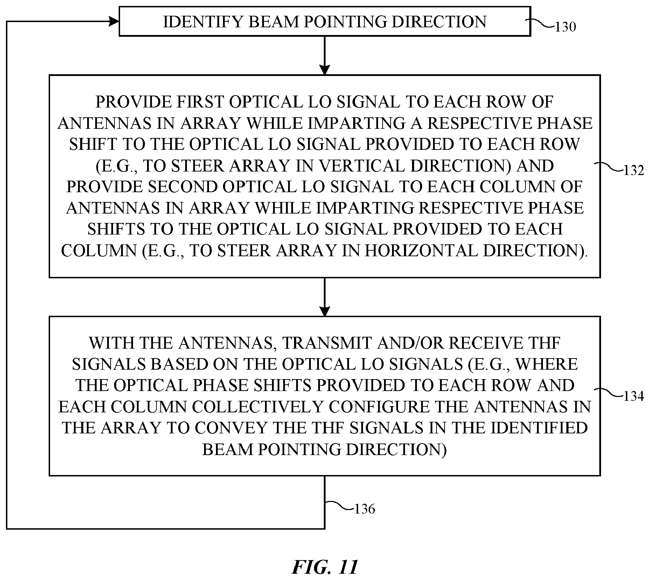

FIG. 11 is a flow chart of illustrative operations involved in using phased antenna array 88 having optical phase shifters 100 and 98 to convey wireless signals at frequencies greater than about 100 GHz. At operation 130, control circuitry 14 (FIG. 1) may identify a desired beam pointing angle for phased antenna array 88. Control circuitry 14 may identify the beam pointing angle based on sensor data, information from a wireless base station, a beam searching algorithm, a wireless protocol governing THF communications, and/or any other desired information. The beam pointing angle may, for example, point towards external wireless communications equipment with THF communications capabilities.

At operation 132, light sources 70 in device 10 (FIG. 6) may produce a first optical local oscillator signal such as optical local oscillator signal LO2 and may produce a second optical local oscillator signal such as optical local oscillator signal LO1. During signal transmission, optical local oscillator signal LO2 may be modulated using wireless data to produce modulated optical local oscillator signal LO2' of FIG. 8.

Optical splitter 110 may output modulated optical local oscillator signal LO2' on optical paths 94. Optical splitter 92 may output optical local oscillator signal LO1 on optical paths 96. Control circuitry 14 may control the M optical phase shifters 100 on optical paths 94 to impart M respective phase shifts to the modulated optical local oscillator signal LO2' on optical paths 94 to produce phase-shifted (optical) signals $A_1$, $A_2$, $A_m$, etc. Control circuitry 14 may control the N optical phase shifters 98 on optical paths 96 to impart N respective phase shifts to the modulated optical local oscillator signal LO1 on optical paths 96 to produce phase-shifted (optical) signals $B_1$, $B_2$, $B_N$, etc. Optical paths 94 may feed the phase-shifted signals A to each antenna 30 in the corresponding row 106 of phased antenna array 88 (e.g., the antennas 30 in row 106-1 may be fed using phase-shifted signals $A_1$, the antennas 30 in row 106-2 may be fed using phase-shifted signals $A_2$, etc.) while optical paths 96 concurrently feed the phase-shifted signals B to each antenna 30 in the corresponding column 108 of phased antenna array 88 (e.g., the antennas 30 in column 108-1 may be fed using phase-shifted signals $B_1$, the antennas 30 in column 108-2 may be fed using phase-shifted signals $B_2$, etc.).

The optical coupler 90 in each antenna 30 of phased antenna array 88 may illuminate the corresponding UTC PD 42 with the combination of phase-shifted signal A and phase-shifted signal B provided to that pixel location in the array. For example, the optical coupler 90 in the antenna 30 of row 106-1 and column 108-1 may illuminate the corresponding UTC PD 42 with phase-shifted signal $A_1$ and phase-shifted signal $B_1$, the optical coupler 90 in the antenna 30 of row 106-M and column 108-N may illuminate the corresponding UTC PD 42 with phase-shifted signal $A_M$ and phase-shifted signal $B_N$, etc. The antennas 30 may convey THF signals based on the phase-shifted signals used to illuminate the UTC PDs 42 (at operation 134). This may cause each row of antennas 30 to contribute to formation of a THF signal beam that is oriented in a first direction along a first degree of freedom (e.g., within the Y-Z plane) while concurrently causing each column of antennas 30 to contribute to formation of the THF signal beam with orientation in a second direction along a second degree of freedom (e.g., within the X-Z plane). The optical phase shifts provided to the rows 106 and provided to the columns 108 may collectively cause phased antenna array 88 to form a signal beam of THF signals in the selected beam pointing direction (e.g., as identified at operation 130). Processing may subsequently loop back to operation 130 via path 136 to update the beam pointing direction over time (e.g., as device 10 and/or the external communications equipment moves overtime). The optical components described herein (e.g., MZM modulator(s), waveguide(s), phase shifter(s), UTC PD(s), etc.) may be implemented in plasmonics technology if desired.

Device 10 may gather and/or use personally identifiable information. It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

The methods and operations described above in connection with FIGS. 1-11 (e.g., the operations of FIG. 11) may be performed by the components of device 10 using software, firmware, and/or hardware (e.g., dedicated circuitry or hardware). Software code for performing these operations may be stored on non-transitory computer readable storage media (e.g., tangible computer readable storage media) stored on one or more of the components of device 10 (e.g., storage circuitry 16 of FIG. 1). The software code may sometimes be referred to as software, data, instructions, program instructions, or code. The non-transitory computer readable storage media may include drives, non-volatile memory such as non-volatile random-access memory (NVRAM), removable flash drives or other removable media, other types of random-access memory, etc. Software stored on the non-transitory computer readable storage media may be executed by processing circuitry on one or more of the components of device 10 (e.g., processing circuitry 18 of FIG. 1, etc.). The processing circuitry may include microprocessors, central processing units (CPUs), application-specific integrated circuits with processing circuitry, or other processing circuitry.

If desired, in some examples, an electronic device may be provided having: a first light source; a second light source, an array of antennas arranged in rows and columns, each antenna in the array including a respective photodiode coupled to a respective antenna radiating element; first optical paths coupled to the rows of the array; second optical paths coupled to the columns of the array; first optical phase shifters disposed on the first optical paths; and second optical phase shifters disposed on the second optical paths. The first light source may be configured to generate a first optical local oscillator (LO) signal. The second light source may be configured to generate a second optical LO signal. The first optical phase shifters may be configured to output phase-shifted versions of the first optical LO signal on the first optical paths. The second optical phase shifters may be configured to output phase-shifted versions of the second optical LO signal on the second optical paths. The photodiodes may be configured to convey wireless signals using the antenna radiating elements based on the phase-shifted versions of the first optical LO signals and the phase-shifted versions of the second optical LO signals.

If desired, in some examples, an electronic device may be provided having: a first antenna having a first photodiode, a first antenna radiating element coupled to the first photodiode, and a first optical coupler coupled to the first photodiode; a second antenna having a second photodiode, a second antenna radiating element coupled to the second photodiode, and a second optical coupler coupled to the second photodiode; a first optical path coupled to the first optical coupler and the second optical coupler; and a first optical phase shifter. The first optical phase shifter may be configured to generate a first phase-shifted signal on the first optical path by applying a first optical phase shift to a first optical local oscillator (LO) signal. The first photodiode may be configured to transmit first wireless signals using the first antenna radiating element based at least on the first phase-shifted signal. The second photodiode may be configured to transmit second wireless signals using the second antenna radiating element based at least on the first phase-shifted signal.

According to an aspect of the invention, an electronic device is provided that includes a first light source configured to generate a first optical local oscillator (LO) signal, a second light source configured to generate a second optical LO signal, an array of antennas arranged in rows and columns, each antenna in the array including a respective photodiode coupled to a respective antenna radiating element, first optical paths coupled to the rows of the array, second optical paths coupled to the columns of the array, first optical phase shifters disposed on the first optical paths and configured to output phase-shifted versions of the first optical LO signal on the first optical paths and second optical phase shifters disposed on the second optical paths and configured to output phase-shifted versions of the second optical LO signal on the second optical paths, the photodiodes in the array being configured to convey wireless signals using the antenna radiating elements based on the phase-shifted versions of the first optical LO signals and the phase-shifted versions of the second optical LO signals.

Preferably, the electronic device includes an optical modulator configured to modulate wireless data onto the first optical LO signals for transmission via the wireless signals.

Preferably, the photodiodes in the array are configured to transmit and receive the wireless signals based on the phase-shifted versions of the first optical LO signals and the phase-shifted versions of the second optical LO signals.

Preferably, each of the first optical phase shifters is configured to apply a respective optical phase shift on each of the first optical paths.

Preferably, each of the second optical phase shifters is configured to apply a respective optical phase shift on each of the second optical paths.

Preferably, the electronic device includes a lens at least partially overlapping the array.

Preferably, the electronic device includes one or more processors configured to select a beam pointing direction, the first optical phase shifters and the second optical phase shifters being configured to control the antennas to produce a wireless signal beam at a frequency greater than 100 GHz in the selected beam pointing direction.

According to an aspect of the invention, a method of wireless communication via an electronic device having an array of antennas arranged in rows and columns, the antennas having photodiodes and antenna radiating elements coupled to the photodiodes, the method is provided that includes receiving, at the photodiodes in the antennas of each row in the array, a respective phase-shifted version of a first optical local oscillator (LO) signal, receiving, at the photodiodes in the antennas of each column of the array, a respective phase-shifted version of a second optical LO signal and transmitting, via the antenna radiating elements, wireless signals based on the phase-shifted versions of the first optical LO signal and the phase-shifted versions of the second optical LO signal.

Preferably, the method includes modulating wireless data onto the first optical LO signal.

Preferably, the method includes modulating wireless data onto the second optical LO signal.

Preferably, the method includes with the photodiodes, using the antenna radiating elements to receive the wireless signals based on the phase-shifted versions of the first optical LO signal and the phase-shifted versions of the second optical LO signal.

Preferably, the method includes with the photodiodes, using the antenna radiating elements to transmit the wireless signals based on the phase-shifted versions of the first optical LO signal and the phase-shifted versions of the second optical LO signal.

Preferably, the method includes with first optical phase shifters, applying first optical phase shifts to the first optical LO signal, with second optical phase shifters, applying second optical phase shifts to the second optical LO signal and adjusting the first optical phase shifts and the second optical phase shifts to control the antenna radiating elements to form a signal beam of the wireless signals oriented in a beam pointing direction.

According to an aspect of the invention, an electronic device is provided that includes a first antenna having a first photodiode, a first antenna radiating element coupled to the first photodiode, and a first optical coupler coupled to the first photodiode, a second antenna having a second photodiode, a second antenna radiating element coupled to the second photodiode, and a second optical coupler coupled to the second photodiode, a first optical path coupled to the first optical coupler and the second optical coupler and a first optical phase shifter configured to generate a first phase-shifted signal on the first optical path by applying a first optical phase shift to a first optical local oscillator (LO) signal, the first photodiode being configured to transmit first wireless signals using the first antenna radiating element based at least on the first phase-shifted signal, and the second photodiode being configured to transmit second wireless signals using the second antenna radiating element based at least on the first phase-shifted signal.

Preferably, the electronic device includes a second optical path coupled to the first optical coupler and a second optical phase shifter configured to generate a second phase-shifted signal on the second optical path by applying a second optical phase shift to a second optical LO signal, the first photodiode being configured to transmit the first wireless signals using the first antenna radiating element based on the second phase-shifted signal.

Preferably, the electronic device includes a third optical path coupled to the second optical coupler and a third optical phase shifter configured to generate a third phase-shifted signal on the third optical path by applying a third optical phase shift to the second optical LO signal, the second photodiode being configured to transmit the second wireless signals using the second antenna radiating element based on the third phase-shifted signal.

Preferably, the electronic device includes a third antenna having a third photodiode, a third antenna radiating element coupled to the third photodiode, and a third optical coupler coupled to the third photodiode and the second optical path and a fourth antenna having a fourth photodiode, a fourth antenna radiating element coupled to the fourth photodiode, and a fourth optical coupler coupled to the fourth photodiode and the fourth optical path, the third photodiode is configured to transmit third wireless signals using the third antenna radiating element based at least on the second phase-shifted signal and the fourth photodiode is configured to transmit fourth wireless signals using the fourth antenna radiating element based at least on the third phase-shifted signal.

Preferably, the electronic device includes a fourth optical path coupled to the third optical coupler and the fourth optical coupler and a fourth optical phase shifter configured to generate a fourth phase-shifted signal on the fourth optical path by applying a fourth optical phase shift to the first optical LO signal, the third photodiode is configured to transmit the third wireless signals using the third antenna radiating element based on the fourth phase-shifted signal and the fourth photodiode is configured to transmit the fourth wireless signals using the fourth antenna radiating element based on the fourth phase-shifted signal.

Preferably, the electronic device includes a third antenna having a third photodiode, a third antenna radiating element coupled to the third photodiode, and a third optical coupler coupled to the third photodiode and the second optical path, a third optical path coupled to the third optical coupler and a third optical phase shifter configured to generate a third phase-shifted signal on the third optical path by applying a third optical phase shift to the first optical LO signal, the third photodiode being configured to transmit third wireless signals using the third antenna radiating element based on the second phase-shifted signal and the third phase-shifted signal.

Preferably, the electronic device includes a third antenna at least partially overlapping the first antenna and having a third photodiode, a third antenna radiating element coupled to the third photodiode, and a third optical coupler coupled to the third photodiode, the third antenna radiating element being oriented orthogonal to the first antenna radiating element, a third optical path coupled to the third optical coupler and a second optical phase shifter configured to generate a second phase-shifted signal on the third optical path by applying a second optical phase shift to a second optical LO signal, the third photodiode being configured to transmit second wireless signals using the third antenna radiating element based at least on the third phase-shifted signal.

The foregoing is merely illustrative and various modifications can be made to the described embodiments. The foregoing embodiments may be implemented individually or in any combination.

**Claims**

1. An electronic device comprising:

   a first light source configured to generate a first optical local oscillator (LO) signal;
   a second light source configured to generate a second optical LO signal;
   an array of antennas arranged in rows and columns, each antenna in the array including a respective photodiode coupled to a respective antenna radiating element;
   first optical paths coupled to the rows of the array;
   second optical paths coupled to the columns of the array;
   first optical phase shifters disposed on the first optical paths and configured to output phase-shifted versions of the first optical LO signal on the first optical paths; and
   second optical phase shifters disposed on the second optical paths and configured to output phase-shifted versions of the second optical LO signal on the second optical paths, the photodiodes in the array being configured to convey wireless signals using the antenna radiating elements based on the phase-shifted versions of the first optical LO signals and the phase-shifted versions of the second optical LO signals.

2. The electronic device of claim 1, further comprising:
   an optical modulator configured to modulate wireless data onto the first optical LO signals for transmission via the wireless signals.

3. The electronic device of either of claims 1 or 2, wherein the photodiodes in the array are configured to transmit and receive the wireless signals based on the phase-shifted versions of the first optical LO signals and the phase-shifted versions of the second optical LO signals.

4. The electronic device of any preceding claim, wherein each of the first optical phase shifters is configured to apply a respective optical phase shift on each of the first optical paths.

5. The electronic device of claim 4, wherein each of the second optical phase shifters is configured to apply a respective optical phase shift on each of the second optical paths.

6. The electronic device of any preceding claim, further comprising:

a lens at least partially overlapping the array.

7. The electronic device of any preceding claim further comprising:
one or more processors configured to select a beam pointing direction, the first optical phase shifters and the second optical phase shifters being configured to control the antennas to produce a wireless signal beam at a frequency greater than 100 GHz in the selected beam pointing direction.

8. A method of wireless communication via an electronic device having an array of antennas arranged in rows and columns, the antennas having photodiodes and antenna radiating elements coupled to the photodiodes, the method comprising:

receiving, at the photodiodes in the antennas of each row in the array, a respective phase-shifted version of a first optical local oscillator (LO) signal;
receiving, at the photodiodes in the antennas of each column of the array, a respective phase-shifted version of a second optical LO signal; and
transmitting, via the antenna radiating elements, wireless signals based on the phase-shifted versions of the first optical LO signal and the phase-shifted versions of the second optical LO signal.

9. The method of claim 8, further comprising modulating wireless data onto the first optical LO signal.

10. The method of either of claims 8 or 9, further comprising modulating wireless data onto the second optical LO signal.

11. The method of any of claims 8 to 10, further comprising:
with the photodiodes, using the antenna radiating elements to receive the wireless signals based on the phase-shifted versions of the first optical LO signal and the phase-shifted versions of the second optical LO signal.

12. The method of claim 11, further comprising:
with the photodiodes, using the antenna radiating elements to transmit the wireless signals based on the phase-shifted versions of the first optical LO signal and the phase-shifted versions of the second optical LO signal.

13. The method of any of claims 8 to 12, further comprising:

with first optical phase shifters, applying first optical phase shifts to the first optical LO signal;
with second optical phase shifters, applying second optical phase shifts to the second optical LO signal; and
adjusting the first optical phase shifts and the second optical phase shifts to control the antenna radiating elements to form a signal beam of the wireless signals oriented in a beam pointing direction.

ELECTRONIC DEVICE

CONTROL CIRCUITRY

STORAGE CIRCUITRY

PROCESSING CIRCUITRY

INPUT/OUTPUT CIRCUITRY

INPUT/OUTPUT DEVICES

WIRELESS CIRCUITRY

TRANSCEIVER CIRCUITRY

ANTENNA

ANTENNA

*FIG. 1*

**FIG. 2**

**FIG. 3**

**FIG. 4**

**FIG. 5**

EP 4 156 555 A1

24

26

32  SIGIF

82

DAT

DAC

34

36

CTRL

78

76

74

LO1+S

LO1
LO2

64

LO1

UTC
PD

OC

80    64    62

60

OS

OPTICAL COMPONENTS

40

30    42

38    V_BIAS

52

LO2
LO2'

56

MZM

W_BIAS

58

62

LO2

66

54

45

LOrx

63

68

OPTICAL
RECEIVER

72

28

LO
LIGHT
SOURCES

70

**FIG. 6**

*FIG. 7*

**FIG. 8**

*FIG. 9*

**FIG. 10**

IDENTIFY BEAM POINTING DIRECTION ~130

PROVIDE FIRST OPTICAL LO SIGNAL TO EACH ROW OF ANTENNAS IN ARRAY WHILE IMPARTING A RESPECTIVE PHASE SHIFT TO THE OPTICAL LO SIGNAL PROVIDED TO EACH ROW (E.G., TO STEER ARRAY IN VERTICAL DIRECTION) AND PROVIDE SECOND OPTICAL LO SIGNAL TO EACH COLUMN OF ANTENNAS IN ARRAY WHILE IMPARTING RESPECTIVE PHASE SHIFTS TO THE OPTICAL LO SIGNAL PROVIDED TO EACH COLUMN (E.G., TO STEER ARRAY IN HORIZONTAL DIRECTION). ~132

WITH THE ANTENNAS, TRANSMIT AND/OR RECEIVE THF SIGNALS BASED ON THE OPTICAL LO SIGNALS (E.G., WHERE THE OPTICAL PHASE SHIFTS PROVIDED TO EACH ROW AND EACH COLUMN COLLECTIVELY CONFIGURE THE ANTENNAS IN THE ARRAY TO CONVEY THE THF SIGNALS IN THE IDENTIFIED BEAM POINTING DIRECTION) ~134

~136

*FIG. 11*

Europäisches
Patentamt

European
Patent Office

Office européen
des brevets

## EUROPEAN SEARCH REPORT

**Application Number**

**EP 22 19 4876**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/039153 A1 (HASHEMI HOSSEIN [US] ET AL) 8 February 2018 (2018-02-08) * paragraph [0049] * * paragraph [0056] * * figures 4, 6 * | 1-13 | INV. H04B10/2575 |

TECHNICAL FIELDS
SEARCHED      (IPC)

H04B

The present search report has been drawn up for all claims

| Place of search | Date of completion of the search | Examiner |
|---|---|---|
| Munich | 31 January 2023 | Inan, Beril |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

**EP 4 156 555 A1**

## ANNEX TO THE EUROPEAN SEARCH REPORT
## ON EUROPEAN PATENT APPLICATION NO.

EP 22 19 4876

31-01-2023

| Patent document cited in search report | Publication date | Patent family member(s) | Publication date |
|---|---|---|---|
| US 2018039153 A1 | 08-02-2018 | US 2018039153 A1<br>US 2018039154 A1 | 08-02-2018<br>08-02-2018 |

EPO FORM P0459

**EP 4 156 555 A1**

**Patent documents cited in the description**

- US 89284922

- US 63247184